# EUROPÄISCHE PATENTANMELDUNG

(11) **EP 2 853 880 A1**
(43) Veröffentlichungstag der Anmeldung: **01.04.2015**
(21) Anmeldenummer: 14183846.6
(22) Anmeldetag: 05.09.2014
(51) Int. Cl.: G01N 3/24, G01N 19/04, G01N 3/04

(54) **Verwendung eines Justierelementes zur Ausrichtung geneigter Oberflächen von Prüfkörpern sowie Vorrichtung umfassend das Justierelement und Verfahren zur Herstellung eines Haftverbundes zwischen Adhäsiven und einer Zahnoberfläche**

(30) Priorität: 09.09.2013 DE 102013109811
(71) Anmelder: Heraeus Kulzer GmbH, 63450 Hanau (DE)
(72) Erfinder: Kastrati, Astrit, 61206 Wöllstadt (DE); Hoffmann, Marcus, 61250 Usingen (DE); Müller, Waltraut, 60318 Frankfurt (DE)
(74) Vertreter: Bendele, Tanja

(57) **Zusammenfassung**

Die vorliegende Erfindung betrifft die Verwendung mindestens eines Justierelementes zur planparallelen Ausrichtung einer ersten Oberfläche, insbesondere eines Prüfkörpers umfassend eine Dentin und/oder Schmelzoberfläche, relativ zu einer Kontaktfläche und/oder zu mindestens einer zweiten Oberfläche, insbesondere zu einer Kontaktfläche, an der ein selbstadhäsives Dentalmaterial oder ein nicht-adhäsives Dentalmaterial in Form eines dreidimensionalen Formkörpers mit einer, optional mit einem haftenden Dentalmaterial beschichteten, ersten Oberfläche in Kontakt tritt, sowie die Verwendung des mindestens einen Justierelementes in einer Vorrichtung, insbesondere in einer Vorrichtung zur Herstellung eines Haftverbundes an der Kontaktfläche zwischen der ersten Oberfläche und der mindestens zweiten Oberfläche und ein Verfahren zur Bestimmung der Kraft, die zur Trennung oder zum Bruch des Haftverbundes, insbesondere in Form eines dreidimensionalen Formkörpers, an der Kraft- bzw. Kontaktfläche zwischen der ersten und der mindestens zweiten Oberfläche aufgebracht werden muss (Fig. 6).

## Beschreibung

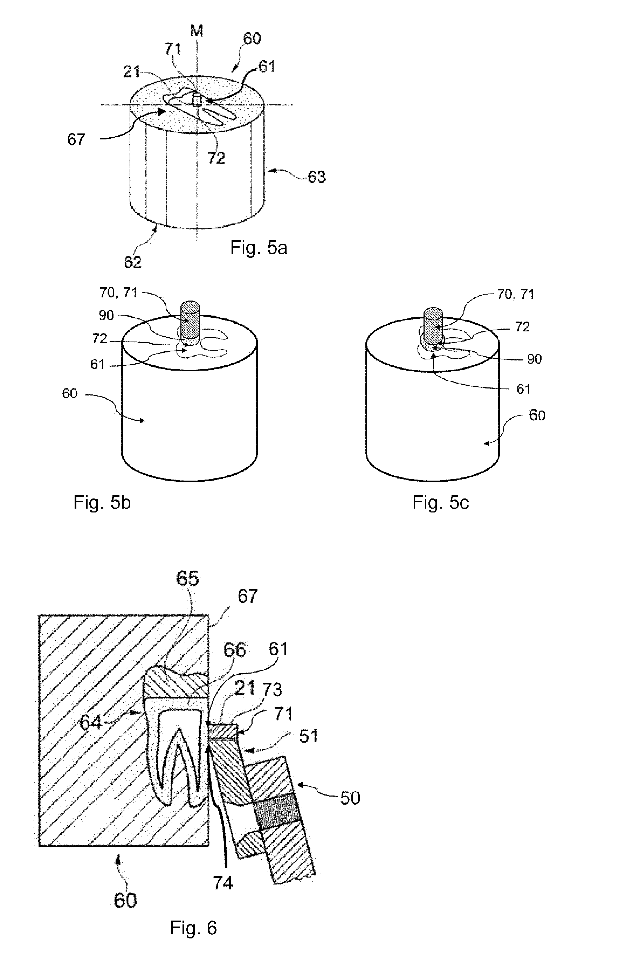

Die vorliegende Erfindung betrifft die Verwendung mindestens eines Justierelementes zur planparallelen Ausrichtung einer ersten Oberfläche, insbesondere eines Prüfkörpers umfassend eine Dentin und/oder Schmelzoberfläche, relativ zu einer Kontaktfläche und/oder zu mindestens einer zweiten Oberfläche, insbesondere zu einer Kontaktfläche, an der ein selbstadhäsives Dentalmaterial oder ein nicht-adhäsives Dentalmaterial in Form eines dreidimensionalen Formkörpers mit einer, optional mit einem haftenden Dentalmaterial beschichteten, ersten Oberfläche in Kontakt tritt, sowie die Verwendung des mindestens einen Justierelementes in einer Vorrichtung, insbesondere in einer Vorrichtung zur Herstellung eines Haftverbundes an der Kontaktfläche zwischen der ersten Oberfläche und der mindestens zweiten Oberfläche und ein Verfahren zur Bestimmung der Kraft, die zur Trennung oder zum Bruch des Haftverbundes, insbesondere in Form eines dreidimensionalen Formkörpers, an der Kraft- bzw. Kontaktfläche zwischen der ersten und der mindestens zweiten Oberfläche aufgebracht werden muss (Fig. 6).

Für dentale Materialen, insbesondere für dentale Adhäsive oder selbstadhäsive Dentalmaterialien oder ggf. auch modellierbare Dentalmaterialien, ist die Haftung an Schmelz und Dentin eine wichtige Eigenschaft. Die Messung wie gut ein dentales Material oder dentales Adhäsiv auf einem Zahn bzw. auf einer Oberfläche eines Zahns haftet, wird mit der sogenannten Scherhaftungsmethode untersucht. Das Verfahren zur Bestimmung der Scherhaftung wird nach der DIN EN ISO 29022:2013 durchgeführt, wofür Menschen- oder Rinderzähne in Dentalhartgips oder Acrylharz, bevorzugt in selbsthärtende Acrylharze, eingebettet werden. Die daraus entstandenen Prüfkörper werden anschließend geschliffen und nach DIN EN ISO 29022:2013 weiter verarbeitet.

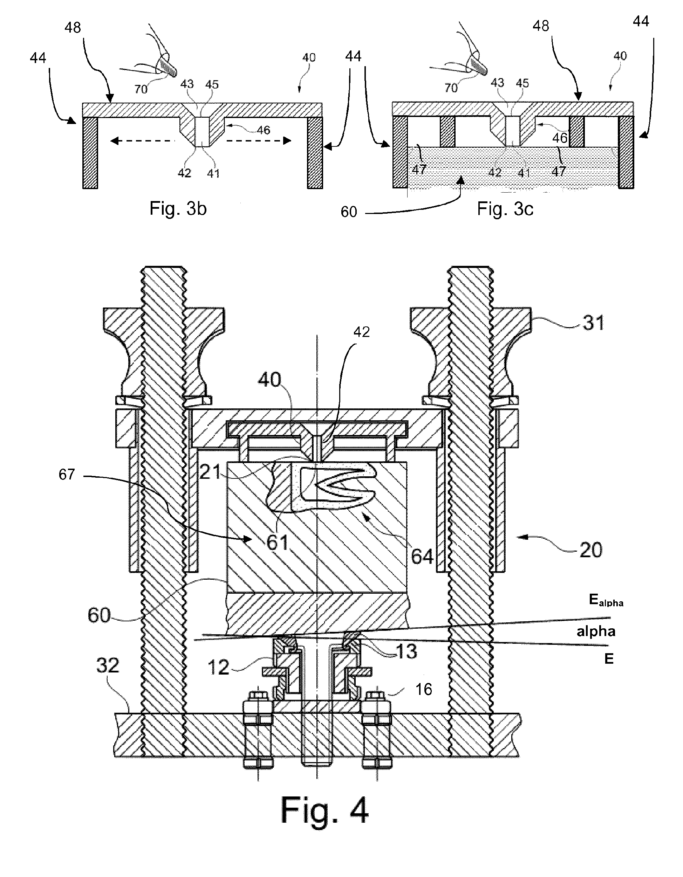

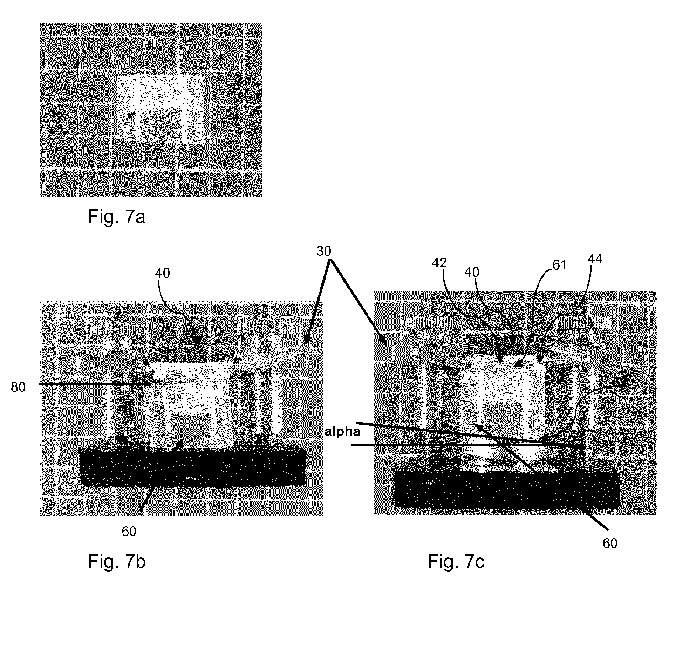

Das gesamte Verfahren, insbesondere nach DIN EN ISO 29022:2013, kann in zwei Verfahrensabschnitte bzw. in zwei getrennte Verfahren unterteilt werden. Im ersten Abschnitt wird in einer ersten Vorrichtung ein Haftverbund hergestellt und in einem zweiten Abschnitt wird in einer zweiten Vorrichtung der Bruch des Haftverbundes herbeigeführt. Dieses Verfahren bzw. beide Verfahrensabschnitte haben mehrere Herausforderungen. Zunächst muss ein Prüfkörper mit der für die Haftung eines Dentalmaterials relevanten Oberfläche, insbesondere eines Zahns, hergestellt werden. Dafür muss der Zahn mit der für die Haftung relevanten Oberfläche in der Regel in ein Acrylharz eingebettet, und anschließend diese Oberfläche zugänglich gemacht werden. Hierzu wird der nach dem lichtvermittelten oder chemisch vermittelten Aushärten erhaltene, in der Regel zylindrische Prüfkörper, plan geschliffen, um ein ausreichendes Areal der für die Haftung eines Dentalmaterials relevanten Oberfläche, wie Zahnsubstanz, insbesondere Zahnschmelz und Dentin, zur Prüfung freizulegen. Bedingt durch den Schrumpf des Einbettungsmaterials, wie Acrylharz, wird ein Prüfkörper mit geneigten bzw. zueinander nicht planparallelen Oberfläche, insbesondere Ober- und Unterseiten (Fig. 7a), erhalten. Dies stellt häufig ein Problem dar, da der Prüfkörper für die Einspannung in die erste Vorrichtung nach dem Stand der Technik, insbesondere zur Herstellung eines Haftverbundes (Fig. 4), zwingend planparallel sein muss. Daher muss auch die gegenüberliegende Unterseite bzw. Standfläche des Prüfkörpers, die der zu testenden Oberfläche abgewandt ist, plan geschliffen werden, was bei manuellen Schleifprozessen nur schwer zu erreichen ist. Sind die für die Haftung eines Dentalmaterials relevante bzw. erste Oberfläche und die Unterseite des Prüfkörpers nicht planparallel zueinander, entsteht bei einer Vorrichtung nach dem Stand der Technik zur Herstellung eines Haftverbundes zwischen dem zum Einbringen eines Dentalmaterials auf dem Prüfkörper platzierten Formteils, wie z.B. eine Ultradent-Form und der ersten Oberfläche, wie Schmelz oder Dentin, eines Prüfkörpers, ein Spalt (Fig. 7b).

In einem nachfolgenden Schritt wird ein Dentalmaterial, insbesondere Komposit, wie selbstadhäsive Dentalmaterial oder nicht-adhäsives Dentalmaterial, oder Adhäsiv, in die Probenvertiefung gefüllt, was bei nicht planparallelen Oberflächen in der Vorrichtung nach dem Stand der Technik (Fig. 7b) zu durch den Spalt aus der Probenvertiefung austretenden Dentalmaterial und Pressfahnen führt. Die aus dem austretenden Dentalmaterial entstehenden Pressfahnen vergrößern die Klebefläche zwischen Prüfkörper und dem auf Haftung zu testenden Dentalmaterial über die gewünschte Kontaktfläche hinaus. Diese erweiterte Klebefläche kann sich gegebenenfalls auch auf das umgebende Einbettungsmaterial des Prüfkörpers ausbreiten. Folglich entsteht ein erweiterter Haftverbund mit einer gewünschten Haftfläche im Bereich der Kontaktfläche zwischen einem Dentalmaterial, wie ein Komposit, und einer Zahnoberfläche, die ggf. mit einem dentalen Adhäsiv behandelt ist, und zusätzlich eine unerwünschte Haftfläche zwischen dem ausgebreiteten Dentalmaterial in Form der Pressfahne und gegebenenfalls dem Einbettungsmaterial, wobei diese Haftflächen mit einander verbunden sind. Dieser nach dem Aushärten durch die Pressfahnen erweiterter Haftverbund erschwert den letzten Schritt, die Einspannung des nach dem Aushärten mittels eines Formteils erhaltenen dreidimensionalen Formkörpers des Dentalmaterials in das Prüfgerät bzw. in eine Vorrichtung zur Ausübung einer Kraft. In dieser Vorrichtung wird die Kraft gemessen, die einen Bruch des Haftverbundes an der tatsächlichen Klebefläche, die nach dem Stand der Technik nicht auf die relevante und gewünschte Kontaktfläche begrenzt ist, herbeiführt. Diese vergrößerte Fläche bei einer ausgeprägten Pressfahne verfälscht die Ergebnisse, da die reale Kontaktfläche zwischen Zahnoberfläche und Dentalmaterial kleiner ist als die tatsächliche bzw. reale (Haft-)Fläche. Ausgewertet wird die Kraft pro Fläche des Haftverbundes an der Kontaktfläche, wobei diese Fläche ein standardisierter Wert ist, der durch die Geometrie eines Formteils vorgegeben ist. Damit weicht die zur Berechnung verwendete Flächengröße von der tatsächlichen gemessenen Fläche mit einer Pressfahne stark ab. Eine Umrechnung der Fläche mit Pressfahne ist nicht ohne Schwierigkeiten möglich, da die Pressfahne keine klare Geometrie aufweist. Ferner sind Oberflächeneigenschaften des gegebenenfalls ebenfalls benetzten Einbettungsmaterials im Bereich der Klebefläche unterschiedlich zur ggf. mit einem Adhäsiv vorbehandelten Zahnoberfläche (Dentin, Zahnschmelz), sodass eine andere Haftfestigkeit besteht, die bei Bruch des gesamten Haftverbundes den erhaltenen Messwert verfälscht.

Ein weiteres Problem ist der Materialverlust aufgrund des durch den Spalt austretenden Dentalmaterials, wodurch ein zur Füllung einer der Probenvertiefung erhöhter Materialbedarf besteht. Zusätzlich führt das langwierige manuelle Anschleifen des Prüfkörpers in eine planparallele Geometrie zu einem starken Materialverlust. Dadurch wird die Gesamthöhe des Prüfkörpers stark verringert, wodurch das Einspannen in die Vorrichtung zur Herstellung eines Haftverbundes zwischen der ersten Oberfläche und einer zweiten Oberfläche, insbesondere nach DIN EN ISO 29022:2013, nicht mehr möglich ist. Gemäß DIN EN ISO 29022:2013 ist es zulässig die Höhe des Prüfkörpers durch Verwendung von bis zu 12 Mikroskopier-Objektträgern auszugleichen, um die minimal geforderte Höhe von 20 mm zu erreichen. Dabei werden die Objektträger mit einem Klebeband zusammen geklebt und unter der Unterseite des Prüfkörpers positioniert. Dies ist umständlich und führt in einer Vorrichtung nach dem Stand der Technik zur Herstellung des Haftverbundes zu einer Instabilität der Anordnung der übereinander angeordneten Elemente, wie Objektträger, Prüfkörper und Formteil. Ein Nachteil der Objektträger ist, dass der Ausgleich der Höhe nur in Schritten entsprechend der Dicke des einzelnen Objektträgers möglich ist, die gemäß Stand der Technik z.B. nach DIN ISO 8037-1 zwischen 1,0 mm und 1,5 mm beträgt. Unabhängig davon welche Objektträger verwendet werden, ist eine stufenlose bzw. kontinuierliche Höheneinstellung abweichend von der Dicke des einzelnen Objektträgers nicht möglich. Ein weiterer Nachteil der in der Regel aus Glas bestehenden Objektträger ist ihre geringe Bruchfestigkeit, die beim Einspannen des Prüfkörpers unter ein Formteil in die Vorrichtung bis zum Kraftschluss aufgebrachten Druck zum Bruch der Deckgläser führen kann.

Die vorgenannten Herausforderungen bei der Messung einer Scherhaftung wurden in der US 6,324,916 B1 diskutiert und zur Verbesserung der Genauigkeit der Messung eine Scher-Vorrichtung beschrieben, die mit einem Formteil zur Ausübung der Scherkraft über eine minimale Kontaktfläche an einem Formkörper eines Dentalmaterials die Scherkraft ausübt. Allerdings bietet die US 6,324,916 B1 keine Lösung für die Entstehung von Pressfahnen und damit für die Problematik der undefinierten Kontaktfläche und verfälschten Fläche des Haftverbundes.

Daher bestehen nach wie vor signifikante Nachteile der aktuellen Methode wie i) das zeitaufwendige Anschleifen der Prüfkörper, ii) die nicht zu erreichende planparallele Position der zu testenden Zahnoberfläche (Schmelz und Dentin) des Prüfkörpers, iii) der erforderliche Ausgleich durch die brüchigen Objektträger ermöglicht nur den Höhenausgleich, aber nicht den Ausgleich der Schräglage des Prüfkörpers, iv) und damit Entstehen von Spalten zwischen Zahnoberfläche und der Vorrichtung zur Herstellung eines Haftverbundes mit dem Komposit, v) folglich das Auslaufen des Dentalmaterials, insbesondere Komposits, und den damit einhergehenden Materialverlust sowie vi) Bildung von Pressfahnen und damit Entstehung einer verfälschten Fläche in der Kraftmessung, die vii) verfälschte Ergebnisse zur Scherhaftung und damit zur Haftfestigkeit des Dentalmaterials an Zahnoberflächen bedingt.

Daher ist die Aufgabe der vorliegenden Erfindung die Verhinderung der oben beschriebenen Nachteile, insbesondere die Bildung von Pressfahnen, durch Optimierung einer Vorrichtung sowie Verwendung dieser Vorrichtung in einem Verfahren zur Herstellung eines Haftverbundes zwischen mindestens einem Dentalmaterial und einer Zahnoberfläche nach DIN EN ISO 29022:2013. Es ist Aufgabe der vorliegenden Erfindung eine Vorrichtung bereit zu stellen, die eine planparallele Anordnung einer ersten Oberfläche eines Prüfkörpers, insbesondere einer Dentin- und/oder Schmelzoberfläche eines Zahns, und einer Kontaktfläche gewährleistet, an der mindestens eine zweite Oberfläche, insbesondere eine Oberfläche eines haftenden Dentalmaterials, wie Adhäsiv, selbstadhäsiven Dentalmaterials, wie ein Komposit, oder eines nicht-adhäsiven Dentalmaterials, wie Füllungsmaterial, mit der ersten Oberfläche in Kontakt tritt. Ferner soll eine Vorrichtung bereitgestellt werden, welche die Entstehung von Spalten bei Verwendung eines Formteils zwischen einer ersten Oberfläche eines Prüfkörpers und einer Kontaktfläche, insbesondere mindestens einer zweiten Oberfläche, verhindert, sowie das Austreten von Dentalmaterial aus einem Formteil und damit die Entstehung von Pressfahnen verhindert. Es ist insbesondere Ziel die Verwendung einer Vorrichtung bereitzustellen, die bei Verwendung des Formteils keinen Spalt zwischen der unteren Probenöffnung bzw. dem unteren Rand des Formteils und mindestens einer ersten Oberfläche eines Prüfkörpers aufweist, optional mit einem haftenden Dentalmaterial, wie Adhäsiv, beschichteten ersten Oberfläche, sodass kein Dentalmaterial zwischen einer ersten Oberfläche und unterem Rand des Formteils austritt. Weiter ist es Aufgabe der vorliegenden Erfindung eine definierte und reproduzierbare Kontaktfläche zwischen einer ersten Oberfläche und mindestens einer zweiten Oberfläche, insbesondere in Form eines dreidimensionalen Formkörpers, sicherzustellen. Es ist ebenfalls Ziel eine definierte und reproduzierbare Haftfläche des Haftverbundes zwischen einer ersten und mindestens einer zweiten Oberfläche, die mit der Kontaktfläche deckungsgleich ist, zu gewährleisten und damit ein reproduzierbares Verfahren zur Herstellung eines Haftverbundes mit mindestens einer definierten Haftfläche und Geometrie sowie ein reproduzierbares Verfahren zur Bestimmung der Haftfestigkeit eines Dentalmaterials an einer Zahnoberfläche, insbesondere Schmelz und/oder Dentin, insbesondere ein reproduzierbares Verfahren zur Bestimmung der Scherhaftung nach DIN EN ISO 29022:2013 mit reproduzierbaren Messergebnissen als Kraft pro Fläche bereitzustellen.

Die Lösung der Aufgaben wird durch die Gegenstände der unabhängigen Patentansprüche beschrieben sowie in konkreter Ausgestaltung in den Unteransprüchen als auch detailliert in der Beschreibung und den Abbildungen dargestellt. Die Abbildungen sind schematische Zeichnungen, die nicht zwingend maßstabsgetreu sein müssen und lediglich die wesentlichen Bauteile sowie die wesentliche Anordnung aufzeigen.

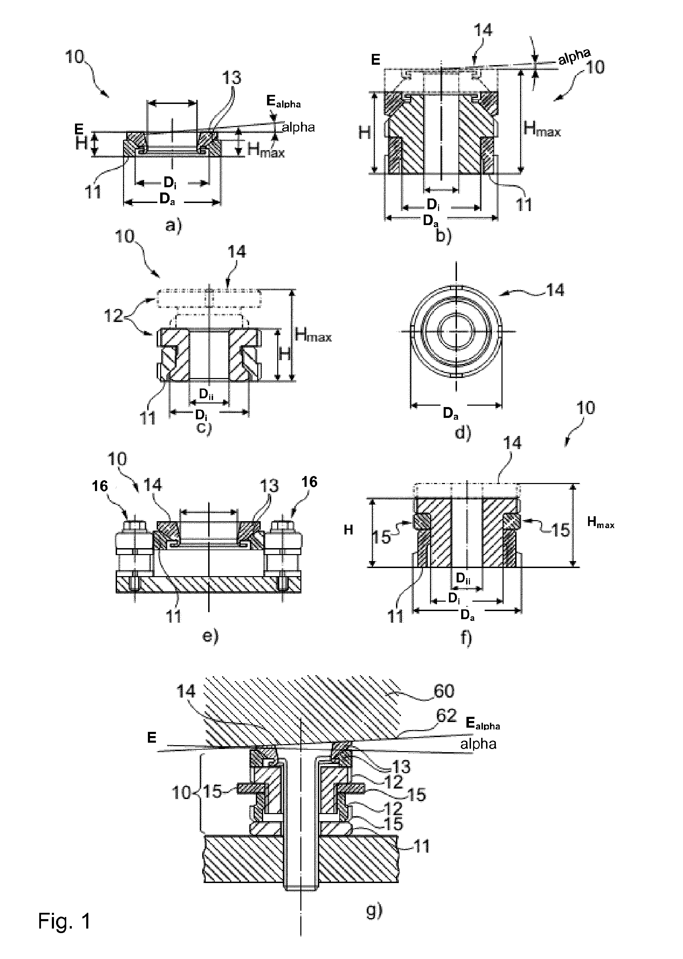

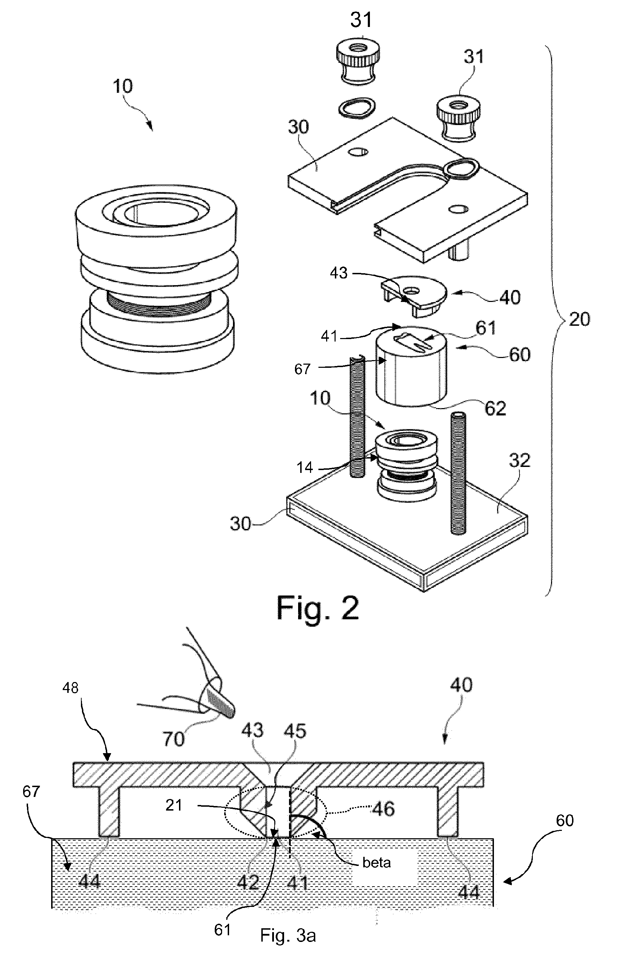

Ein Gegenstand der vorliegenden Erfindung ist eine Vorrichtung umfassend ein Justierelement sowie die Verwendung des mindestens einen Justierelementes, wie in Fig. 1a-g gezeigt, zur Ausrichtung der Höhe und/oder Neigung einer ersten Oberfläche eines Prüfkörpers bzw. Ultradent-Prüfkörper in eine planparallele Position relativ zu mindestens einer Kontaktfläche und/oder zu mindestens einer zweiten Oberfläche in einer Vorrichtung, insbesondere in einer Vorrichtung zur Herstellung eines Haftverbundes (siehe Fig. 4). Eine solche erfindungsgemäße Vorrichtung zur Herstellung eines Haftverbundes ist in Fig. 2, Fig. 4 sowie in Fig. 7c gezeigt.

Die Vorrichtung, insbesondere Messeinrichtung, die bevorzugt auch eine Klemmvorrichtung mit mindestens einem Fixierelement aufweisen, in der eine Ausrichtung einer Probe erforderlich sein kann, umfassen alle Messeinrichtungen, in denen eine vertikale Einwirkung auf die Probe ausgeübt wird und in denen eine nicht planparallele Oberfläche bzw. der Winkel der zu testenden Oberfläche zur Quelle der Einwirkung zu einer Beeinträchtigung der Messergebnisse führen kann. Als Einwirkungen kommen physikalische Kräfte wie Gravitation, elektromagnetische Wechselwirkungen in Form von Licht, Elektrizität, Magnetismus sowie die Schub-, Zug-, Scher- und Fliehkraft in Betracht. Insbesondere gehören Kamera-gekoppelte Vorrichtungen umfassend, Mikroskope, wie Lichtmikroskope, Lasermikroskope (LSM, CLSM), Röntgen-, Ultraschall-, Magnetresonanz- und Rastermikroskopie (AFM, SFM und RKM), CCD-Kamera gekoppelte Vorrichtungen, Vorrichtung zur Messung physikalischer und physikalischchemischer Wechselwirkungen wie Kontaktwinkelmessung zu solchen sensiblen Messeinrichtungen. Somit ist ebenfalls ein Gegenstand der vorliegenden Erfindung die Verwendung mindestens eines Justierelementes, wie in Fig. 1 gezeigt, zur Ausrichtung der Höhe und/oder Neigung einer ersten Oberfläche eines Prüfkörpers in eine planparallele Position relativ zu einer Kontaktfläche und/oder zu mindestens einer zweiten Oberfläche, wobei der Prüfkörper eine zu untersuchende Probe ist, insbesondere Mikroskopieprobe.

Bei der Vorrichtung oder der Verwendung im Sinne der Erfindung wird das mindestens eine Justierelement an der Unterseite eines Prüfkörpers, die gleichzeitig die der ersten Oberfläche abgewandten Seite ist, positioniert. Auf diese Weise wird der Prüfkörper bzw. die erste Oberfläche planparallel relativ zur Quelle der Einwirkung, insbesondere relativ zu einem Formteil, ausgerichtet.

Bei der erfindungsgemäßen Vorrichtung oder Verwendung wird die Ausrichtung mit mindestens einem Justierelement vorgenommen, wobei a) die Höhe des Justierelementes kontinuierlich, insbesondere stufenlos, oder schrittweise in einem Bereich von größer gleich 0 mm, insbesondere bis kleiner gleich 100 mm, und/oder b) die Neigung des Justierelementes kontinuierlich, insbesondere stufenlos, oder schrittweise bis zu einem Winkel alpha von größer gleich 0 Winkelminuten, insbesondere bis kleiner gleich 60° zwischen einer Ebene E und Ebene Eₐₗₚₕₐ des Justierelementes und der Unterseite des Prüfkörpers einstellbar ist. Somit kann (i) die Höhe des Prüfkörpers, insbesondere der ersten Oberfläche, durch Verstellen der Höhe des Justierelementes bei gleichbleibendem Winkel des Justierelementes ausgerichtet werden, (ii) die Neigung des Prüfkörpers, insbesondere der ersten Oberfläche, durch Verstellen des Winkels des Justierelementes bei gleichbleibender Höhe oder (iii) die Höhe sowie die Neigung des Prüfkörpers, insbesondere der ersten Oberfläche, durch Verstellen sowohl der Höhe als auch des Winkels des Justierelementes ausgerichtet werden.

Die Höhe des Justierelementes kann in einem Bereich von größer gleich 0 mm, insbesondere bis kleiner gleich 100 mm verstellt werden, vorzugsweise in einem Bereich von größer gleich 0 mm bis kleiner gleich 100 mm, größer gleich 4 mm bis kleiner gleich 100 mm, größer gleich 4 mm bis kleiner gleich 80 mm, größer gleich 4 mm bis kleiner gleich 70 mm, von größer gleich 4 mm bis kleiner gleich 60 mm, größer gleich 4 mm bis kleiner gleich 50 mm, größer gleich 4 mm bis kleiner gleich 40 mm. Die Höhe kann stufenlos oder Schrittweise, insbesondere in 1 mm Schritten, eingestellt werden. Die Neigung des Justierelementes kann durch Variation des Winkels alpha zwischen der Ebene E und der Ebene Eₐₗₚₕₐ eingestellt werden, wobei die Ebene E der Prüfkörperstellfläche in einer zur Standfläche planparallelen Position entspricht und die Ebene Eₐₗₚₕₐ der geneigten Prüfkörperstandfläche entspricht. Der Winkel alpha kann in einem Bereich von größer gleich 0' Winkelminuten, insbesondere bis kleiner gleich 60° Grad, stufenlos oder Schrittweise eingestellt werden. Vorzugsweise in einem Bereich von größer gleich 0° bis kleiner gleich 50°, größer gleich 0° bis kleiner gleich 45°, von größer gleich 0° bis kleiner gleich 40°, größer gleich 0° bis kleiner gleich 35°, größer gleich 0° bis kleiner gleich 30°, besonders bevorzugt von größer gleich 0° bis kleiner gleich 25°. Insbesondere kann der Winkel alpha in kleinen Schritten (1° = 60'Winkelminuten) von größer gleich 0', 6', 12', 24', 30', 36', 42', 48', 54', und bis kleiner gleich 60' Winkelminuten variiert werden und minimalste Neigungen von kleiner gleich 1° Grad, vorzugsweise kleiner gleich 60', 54', 48', 42', 36', 30', 24', 12', bis kleiner gleich 6' Winkelminuten fein eingestellt werden. Insbesondere ist eine Schrittweise Einstellung des Winkels alpha in einem Bereich von größer gleich 0° bis kleiner gleich 10° in Winkelminuten ['] Schritten von 30' bevorzugt. Bevorzugt ist das Winkel verstellbare Bauteil ein Kugelelement bzw. umfasst ein Kugelgelenk mit drei Freiheitsgraden.

Insbesondere ist die stufenlose bzw. kontinuierliche Einstellung der Höhe und/oder Neigung des Justierelementes ein weiterer Vorteil bei der erfindungsgemäßen Verwendung des Justierelementes im Vergleich zu der Verwendung von Deckgläsern nach dem Stand der Technik zur Einstellung der Höhe, wobei die Dicke der Deckgläser eine stufige Einstellung vorgibt. Mit den im Stand der Technik verwendeten Deckgläsern, insbesondere nach DIN EN ISO 29022, bevorzugt DIN EN ISO 29022:2013, ist kein Ausgleich der Neigung der Zahnoberfläche möglich, auf der die Haftung eines Dentalmaterials getestet werden soll. Die Verwendung des Justierelementes im Sinne der Erfindung ermöglicht einen solchen Ausgleich der Neigung und damit wird die Hauptursache für die Entstehung von Pressfahnen beseitigt, nämlich Spalten aufgrund der Schräglage der ersten Oberfläche. Insbesondere bei schrägen Prüfkörpern bzw. bei Prüfkörpern, dessen Oberflächen nicht planparallel sind, kann bei Verwendung von Deckgläsern in der Vorrichtung zur Herstellung eines Haftverbundes nach dem Stand der Technik eine Dichtigkeit zwischen erster Oberfläche und unterem Rand eines Formteils nicht erzielt werden. Folglich bedingt dies die im Stand der Technik mangelnde definierte und reproduzierbare Kontaktfläche und damit letztlich die verfälschte Haftfläche und die verfälschten Messergebnisse aus der Bestimmung der Haftung bzw. Scherhaftung, insbesondere nach DIN EN ISO 29022, bevorzugt DIN EN ISO 29022:2013. Diese Nachteile behebt die erfindungsgemäße Verwendung des Justierelementes.

Daher ist ein weiterer Gegenstand der vorliegenden Erfindung die Vorrichtung umfassend ein Justierelement sowie die erfindungsgemäße Verwendung des Justierelementes, wie oben beschrieben, wobei die zweite Oberfläche eine Oberfläche mindestens eines haftenden Dentalmaterials, selbstadhäsiven Dentalmaterials und/oder nicht-adhäsiven Dentalmaterials in Form eines dreidimensionalen Formkörpers ist. Insbesondere hat der Formkörper eine dreidimensionale Geometrie, die die Negativform der Probenvertiefung eines Formteils ist. Bevorzugt ist die Geometrie des Formkörpers formbündig an ein Formteil einer Vorrichtung angepasst bzw. das Formteil ist passend an die Geometrie des Formkörpers ausgestaltet. Bevorzugt hat der Formkörper eine zylindrische Geometrie.

Die Geometrie des Formkörpers ist insbesondere von der Ausgestaltung der Probenvertiefung eines Formteils vorgegeben, das zur Aufbringung des zu testenden Materials, vorliegend mindestens eines haftenden Dentalmaterials, selbstadhäsiven Dentalmaterials und/oder nicht-adhäsiven Dentalmaterials, auf die erste Oberfläche eingesetzt wird. Durch eine solche Probenvertiefung bzw. der Innenwand und dem unteren Rand der Probenvertiefung eines Formteils wird die Fläche bzw. der Bereich, der von dem zu testenden Dentalmaterial bedeckt wird, auf der ersten Oberfläche eingegrenzt. Diese abgegrenzte Fläche entspricht der Kontaktfläche (Fig. 3a), an der zwischen der ersten Oberfläche und der mindestens zweiten Oberfläche eine Haftung bzw. Wechselwirkungen zugelassen werden, die zu einem Haftverbund führen. Dadurch wird eine definierte Haftfläche eines Haftverbundes im Sinne der Erfindung erzielt.

Die Haftung (Adhäsion) beschreibt einen komplexen Vorgang an der Phasengrenze der beteiligten Materialien. Unter Haftung wird die aus Wechselwirkungen auf atomarer bzw. molekularer Ebene resultierende Erscheinung verstanden, die als Widerstand gegenüber einer trennenden Beanspruchung des Verbundes auftritt.

Insbesondere wird bei erfindungsgemäßer Verwendung des vorbeschriebenen Justierelementes, insbesondere in einer Vorrichtung, das Formteil so ausgerichtet, dass mindestens eine definierte Kontaktfläche und damit mindestens eine reproduzierbare Haftfläche zum Beispiel eines nicht-adhäsiven Dentalmaterials, wie Füllungswerkstoffes, zum Adhäsiv (Fig. 5b und 5c) oder im Falle von selbstadhäsiven Dentalmaterialien, wie selbstadhäsive Füllungs-/Zementmaterialien, zum Zahn (Fig. 5a) im Sinne der Erfindung erzielt wird. Dabei wird bei Verwendung des Justierelementes die Bildung von Spalten zwischen einer ersten Oberfläche und dem unteren Rand eines Formteils vermieden. Dadurch tritt aus der Probenvertiefung am unteren Rand bzw. durch die untere Probenöffnung kein noch nicht ausgehärtetes Dentalmaterial aus. Folglich wird die Bildung von Pressfahnen vermieden, sodass stets definierte und reproduzierbare Haftflächen im Haftverbund erhalten werden, insbesondere in dreidimensionaler Form (Fig. 5a bis 5c). Eine definierte Haftfläche gewährleistet wiederum eine reproduzierbare Messung der Scherhaftung, insbesondere nach DIN EN ISO 29022, bevorzugt DIN EN ISO 29022:2013, und somit eine reproduzierbare Aussage über die Haftfestigkeit eines Dentalmaterials auf einer ersten Oberfläche. Gleichzeitig wird Material und damit Kosten für das Verfahren eingespart.

Eine kraftschlüssige Einklemmung, insbesondere durch Verwendung einer Klemmvorrichtung und mindestens eines Fixierelementes, des Prüfkörpers kann zusätzlich für die Dichtigkeit entlang des unteren Randes erforderlich sein, wenn durch die planparallele Ausrichtung im Sinne der Erfindung nicht schon eine Dichtigkeit erzielt wird. Dies ist bei Verwendung des Justierelementes zur Einstellung der Höhe und/oder Neigung im Gegensatz zu der Verwendung von Deckgläsern nach dem Stand der Technik und DIN EN ISO 29022, bevorzugt DIN EN ISO 29022:2013, unproblematisch. Aufgrund der Beschaffenheit des Materials des Justierelementes, hergestellt aus Stahl, Edelstahl und/oder jeweils Legierung davon, ist eine kraftschlüssige Einspannung des Prüfkörpers unter dem Formteil ohne Beeinträchtigung des Justierelementes, des Prüfkörpers und/oder der ersten Oberfläche möglich. Dagegen ist bei Verwendung von Deckgläsern aufgrund der geringen Bruchfestigkeit von Glas keine kraftschlüssige Einspannung bzw. Verbindung zwischen dem unteren Rand der Probenvertiefung und der ersten Oberfläche möglich. Bei Bruch des Glases während des Verfahrens zur Herstellung eines Haftverbundes kann ein Bruch zur Verschiebung der Position insbesondere der ersten Oberfläche, in der Vorrichtung führen und zur Bildung von Spalten zwischen einer ersten Oberfläche und dem unteren Rand einer Probenvertiefung des Formteils und damit zum Austritt des Dentalmaterials und Entstehung von Pressfahnen kommen. Ferner kann ein solcher Glasbruch zur Beeinträchtigung der Bildung des Haftverbundes während der auf atomarer bzw. molekularer Ebene standfindenden Wechselwirkungen zwischen einem Dentalmaterial und der ersten Oberfläche führen, insbesondere während des Aushärteprozesses, wobei bereits gebildete chemische sowie physikochemische Bindungen wieder gebrochen werden könnten. Zu solchen Verbindungen in einem Haftverbund bzw. an einer Haftfläche gehören insbesondere Wasserstoffbrücken-Bindungen und kovalente Bindung zwischen den funktionellen Gruppen, die dem Fachmann aus dem Stand der Technik bekannt sind. Durch die Verwendung des Justierelementes wird die Beeinträchtigung der Entstehung von Wechselwirkungen und Bindungen zwischen einer ersten Oberfläche und mindestens einer zweiten Oberfläche, insbesondere eines Dentalmaterials, vermieden. Insbesondere bei Bildung eines Haftverbundes, insbesondere in einer dreidimensionaler Form, zwischen einem haftenden Dentalmaterial, wie Adhäsiv, und einer Zahnoberfläche, wie Schmelz und/oder Dentin, zwischen einem haftenden Dentalmaterial und einem nicht-adhäsiven Dentalmaterial, wie Füll-/Zementwerkstoffe und Komposite, oder zwischen einem selbstadhäsiven Dentalmaterial, wie Komposit, und einer Zahnoberfläche, wie Schmelz und/oder Dentin. Bevorzugt liegen die vorbeschriebenen Haftverbunde als dreidimensionale zylindrische Formen vor (Fig. 5a, 5b, 5c).

Somit ist ein weiterer Gegenstand der vorliegenden Erfindung die Verwendung eines Justierelementes in einer Vorrichtung zur Herstellung mindestens eines Haftverbundes, insbesondere eine Vorrichtung zur Herstellung eines Haftverbundes nach DIN EN ISO 29022, bevorzugt DIN EN ISO 29022:2013, an mindestens einer Kontaktfläche (Fig. 3a), wobei an der mindestens einen Kontaktfläche zwischen der ersten Oberfläche, insbesondere eines Prüfkörpers, und mindestens einer zweiten Oberfläche, insbesondere eines dreidimensionalen Formkörpers, ein Haftverbund besteht, wobei die mindestens eine Kontaktfläche der Fläche entspricht, die durch einen unteren Rand der unteren Probenöffnung, einer Innenwand einer Probenvertiefung eines Formteils und einer unterhalb des unteren Randes des Formteils angeordneten ersten Oberfläche abgegrenzt wird (Fig. 3a-d und Fig. 4).

Bevorzugt führt die Abgrenzung zu einem zwischen dem unteren Rand und der ersten Oberfläche bündigen und spaltenfreien Abschluss, sodass eine Dichtigkeit erzielt wird, die das Austreten von Dentalmaterialien aus der unteren Probenöffnung verhindert.

Bevorzugt weist die Probenvertiefung des Formteils eine zylindrische oder eckige, insbesondere aus vier rechtwinkligen Flächen, bestehende Geometrie auf. Die Geometrie der Probenvertiefung bedingt die räumliche Form des Formkörpers. Somit umfasst der Formkörper im Sinne der Erfindung jede dreidimensionale Form, die durch die Ausgestaltung der Probenvertiefung möglich ist und/oder formbündig zu bzw. eine Negativform eines Formteils einer Vorrichtung ist. Bevorzugt weist der Formkörper eine zylindrische Form auf. Folglich umfasst die Kontaktfläche zwischen der ersten Oberfläche und mindestens einer zweiten Oberfläche, ebenfalls entsprechende zweidimensionale Abmessungen.

Der dreidimensionale Prüfkörper umfasst die zu untersuchenden Probe bzw. mindestens ein zu untersuchendes Material. Dabei kann der Prüfkörper selbst vollständig aus einer zu untersuchenden Materialprobe bestehen oder die zu untersuchende Materialprobe ist in einem anderen Material eingebettet, insbesondere in einem durch Licht oder chemisch polymerisierbaren, härtbaren Material. Bevorzugt weist die zu untersuchende Materialprobe eine erste Oberfläche im Sinne der Erfindung auf, auf der die Haftung eines Dentalmaterials getestet und für diese Zwecke ein Haftverbund hergestellt wird. Bevorzugt ist die zu untersuchende Materialprobe eine Zahnoberfläche, insbesondere eine humane Zahnoberfläche, und die erste Oberfläche ist besonders bevorzugt Schmelz und/oder Dentin.

Ein weiterer Gegenstand der Erfindung ist eine Verwendung des mindestens einen Justierelementes in einer Vorrichtung zur Herstellung eines Haftverbundes, insbesondere eine Vorrichtung zur Herstellung eines Haftverbundes nach DIN EN ISO 29022, wobei an der mindestens einen Kontaktfläche mindestens ein Haftverbund gebildet wird, zwischen
a) der ersten Oberfläche, insbesondere die eines dreidimensionalen Prüfkörpers, welche ausgewählt wird aus (1) natürlichen und/oder (2) synthetischen dentalen Oberflächen umfassend
   (1) natürliche Oberflächen der humanen und tierischen Mundhöhle, wie Zähne, insbesondere Säugetier-Zähne, wie Rinderzähne, Zahnschmelz (Enamelum), Zahnbein (Dentin), Wurzelzement und Wurzelhaut sowie humane und tierische Knochen des Unterkiefers und Oberkiefers, und/oder
   (2) synthetische Oberflächen umfassend Prothesen, Gerüstwerkstoffe für Brücken und Kronen, Implantate, Knochenersatzmaterialien, Füllungsmaterialien, Wurzelfüllungsmaterialien, und Verblendmaterialien jeweils umfassend Werkstoffe ausgewählt aus Metall, Schwermetall, Titan, Legierungen, insbesondere Au, Pt, Ag, Cu, Zn, In, Ir, Pd, Sn, Co, Cr, Ni, Mo, W, Mn, Fe, Si, N und/oder Ru, Zemente umfassend Silikatzemente, Glas-Ionomer-Zemente (Glas-Polyalkenoat-Zemente), lichthärtende Zemente und Cermet-Zemente, Keramik, Zirkonoxid, Glas, Kunststoffe und Kombinationen aus mindestens zwei der vorgenannten Werkstoffe, und
b) mindestens einer zweiten Oberfläche, welche ausgewählt wird aus
   (1) selbstadhäsiven Dentalmaterialien umfassend Ein- und Zwei-Komponenten Dentalmaterialien umfassend dentale selbstadhäsive Polymere, selbstadhäsive Kompositmaterialien, selbstadhäsive Füllungsmaterialien/-kunststoffe, selbstadhäsive Verblendmaterialien/-kunststoffe, selbstadhäsive Prothesenkunststoffe, selbstadhäsive Stumpfaufbauten und selbstadhäsive Fissurenversiegler, insbesondere selbstadhäsive Zementwerkstoffe und/oder
   (2) haftenden Dentalmaterialien umfassend Adhäsive, Adhäsive für Zahn-Kunststoff-Klebung, Adhäsive für Zahn-Keramik-Klebung, Adhäsive für Zahn-Metall-Klebung, Adhäsive für Metall-Kunststoff-Klebung, Adhäsive für Metall-Keramik-Klebung, Adhäsive für Keramik-Kunststoff-Klebung, Adhäsive für Kunststoff-Kunststoff-Klebung, Adhäsive für Keramik-Keramik-Klebung.

In einer Ausführung der Erfindung umfasst die erfindungsgemäße Verwendung mindestens eine Haftverbund nach einer Alternative (a) zwischen der ersten Oberfläche und einer zweiten Oberfläche eines selbstadhäsiven Dentalmaterials in Form eines dreidimensionalen Formkörpers (Fig. 5a) oder nach einer Alternative (b) zwischen der ersten Oberfläche und einer zweiten Oberfläche eines haftenden Dentalmaterials, insbesondere Adhäsivs, in Form mindestens einer Zwischenschicht (Fig. 5b, c), insbesondere als Haftvermittler. Bevorzugt liegt nach der Alternative (b) mindestens ein zweiter Haftverbund zwischen der mindestens einen Zwischenschicht und mindestens einem nicht-adhäsiven Dentalmaterial in Form eines dreidimensionalen Formkörpers vor, wobei nicht-adhäsive Dentalmaterialien umfassen Ein- und Zwei-Komponenten Dentalmaterialien umfassend dentale Polymere, Kompositmaterialien, Füllungsmaterialien/-kunststoffe, Verblendmaterialien/-kunststoffe, Zement, Kompositzemente, Silikatzemente, Glas-Ionomer-Zemente (Glas-Polyalkenoat-Zemente), lichthärtende Zemente, Cermet-Zemente Stumpfaufbauten und Fissurenversiegler. Die nicht-adhäsiven Dentalmaterialien umfassen jeweils mindestens eine Verbindung, insbesondere mindestens eine polymerisierbare Verbindung, bevorzugt Licht- und/oder chemisch aushärtbar, enthaltend (i) mindestens eine Methacrylat-, Acrylat-, Styrol- und/oder Vinyl-Gruppe, und/oder (ii) mindestens eine Säure-funktionelle Gruppe ausgewählt aus Phosphorsäure-, Phosphinäsure-, Phosphonäsure-, Schwefelsäure-, Sulfonsäure-, Sulfinsäure- und Carbonsäure-Gruppe, und/oder (iii) mindestens ein Harz oder eine andere Verbindungen mit mindestens einer ethylenisch ungesättigten Gruppe sowie die jeweiligen Derivate der vorgenannten Verbindungen (i), (ii) und (iii), (insbesondere Anhydride, Ester), und/oder (iv) mindestens eine Komponente basierend auf Glas und/oder mindestens einen Ionen-freisetzende Verbindung. Bevorzugt Monomere sind Mono-, di- und mulitfunktionelle polymerisierbare Verbindungen. Besonders bevorzugte difunktionelle Monomere sind UDMA, Bis-GA, TCD, TEGDAM, EGDMA, HDDMA und monofunktionelle Monomere sind HEMA, HPMA, MMA.

Die mindestens eine Zwischenschicht umfasst mindestens ein haftendes Dentalmaterial, zu denen auch Primer, selbstätzende Primer, Keramik-Primer, Metall-Primer insbesondere lichthärtende Primer gehören. Solche Primer sind insbesondere bei Verwendung von Komposit- oder Zementwerkstoffen, insbesondere nicht-adhäsiven Werkstoffen, erforderlich, um eine gute Haftung an einer ersten Oberfläche, wie Schmelz und/oder Dentin, zu erzielen. In einer besonderen Ausführungsform liegen mindestens zwei Zwischenschichten vor, wobei die erste Zwischenschicht einen Primer und die zweite Zwischenschicht ein Adhäsiv (bond) enthält. Insbesondere werden zwei Zwischenschichten für die Haftvermittlung eines Komposit- oder Zementwerkstoffes auf einer ersten Oberfläche verwendet. Diese Ausführungsform weist insbesondere die Anordnung auf erste Oberfläche/Primer/haftendes Dentalmaterial (Adhäsiv)/ nicht-adhäsives Dentalmaterial.

Bevorzugt liegt die erste Oberfläche in Form eines Prüfkörpers vor. Besonders bevorzugt ist die erste Oberfläche eine Zahnschmelz- und/oder Dentin-Oberfläche eines humanen oder tierischen Zahns, wobei dieser eingebettet ist in einem polymerisierbaren Material, vorzugsweise Acrylat-basierenden Einbettungsmaterial, besonders bevorzugt ist ein Einbettungsmaterial zulässig nach DIN EN ISO 29022. Bevorzugt beim humanen Gebiss sind die Molaren (Mahlzahn), besonders bevorzugt ist der dritte Molar. Beim Säugetier-Gebiss, bevorzugt Rindergebiss wird der Schneidezahn bevorzugt. Die Herstellung des Prüfkörpers erfolgt gemäß der im Stand der Technik bekannten Verfahren, insbesondere des Verfahrens beschrieben in der DIN EN ISO 29022.

Ein weiterer Gegenstand der vorliegenden Erfindung ist eine Vorrichtung (Fig. 2 und Fig. 4) der vorbeschriebenen Art umfassend a) eine Klemmvorrichtung zum Fixieren mindestens einer ersten Oberflächen und b) mindestens eines Justierelementes (Fig. 1a bis 1g) zur Ausrichtung der Höhe und/oder Neigung einer ersten Oberfläche, insbesondere eines Prüfkörpers, in eine planparallele Position der ersten Oberfläche relativ zu mindestens einer Kontaktfläche (Fig. 4), insbesondere zum unteren Rand einer Probenvertiefung eines Formteils. Wobei nach Ausrichtung insbesondere ein Winkel beta von 90° zwischen der Innenwand einer Probenvertiefung bzw. der Mittelachse M des Formkörpers und einer ersten Oberfläche erzielt wird (Fig. 3a).

In einer besonderen Ausführungsform ist die erste Oberfläche, insbesondere die Dentin- und/oder Schmelzoberfläche eines Zahns, bereits mit einem haftenden Dentalmaterial, wie einem vorbeschriebenen Adhäsiv, beschichtet. Somit kann der Auftrag eines haftenden Dentalmaterials, insbesondere in Form mindestens einer Zwischenschicht, im Sinne der Erfindung bereits vor Einbringen des Prüfkörpers in die beschrieben Vorrichtung erfolgen. Alternativ kann der Auftrag des Adhäsivs erfolgen nachdem der Prüfkörper mit der ersten Oberfläche wie oben beschrieben in der Vorrichtung positioniert worden ist.

Ein weiterer Gegenstand der Erfindung ist eine Vorrichtung umfassend eine Klemmvorrichtung zum Fixieren mindestens einer ersten Oberflächen eines, insbesondere in die Klemmvorrichtung einsetzbaren, Prüfkörpers und umfassend mindestens ein Justierelement zur Ausrichtung der Höhe und/oder Neigung einer ersten Oberfläche in eine planparallele Position relativ zu mindestens einer Kontaktfläche.

Die Kontaktfläche zwischen der ersten Oberfläche des Prüfkörpers und einer zweiten Oberfläche eines dreidimensionalen Formkörpers entspricht dem Durchmesser des dreidimensionalen Formkörpers (Fig. 3a und Fig. 5a bis 5c).

Weiterhin ist die Kontaktfläche definiert als die Fläche, die durch einen unteren Rand der unteren Probenöffnung, insbesondere der Innenwand einer Probenvertiefung, des Formteils und der unterhalb des unteren Randes des Formteils angeordneten ersten Oberfläche abgegrenzt wird (Fig. 3a bis 3d und Fig. 4).

Ein Gegenstand der vorliegenden Erfindung ist eine Vorrichtung umfassend
- eine Klemmvorrichtung zum Fixieren mindestens einer ersten Oberflächen und
- mindestens ein Justierelement zur Ausrichtung der Höhe und/oder Neigung einer ersten Oberfläche in eine planparallele Position relativ zu mindestens einer Kontaktfläche,
wobei das mindestens eine Justierelementes zur Ausrichtung der Höhe und/oder Neigung einer ersten Oberfläche eines Prüfkörpers in eine planparallele Position relativ zu mindestens einer Kontaktfläche und/oder zu mindestens einer zweiten Oberfläche in einer Vorrichtung dient (Fig. 4).

Ein weiterer Gegenstand der Erfindung ist eine Vorrichtung zur Herstellung mindestens eines Haftverbundes an mindestens einer Kontaktfläche zwischen einer ersten Oberfläche, insbesondere eines Prüfkörpers, und mindestens einer zweiten Oberfläche, insbesondere eines Formkörpers umfassend ein Dentalmaterial, vorzugsweise zur Herstellung eines Haftverbundes nach DIN EN ISO 29022, umfassend
- eine Klemmvorrichtung zum Fixieren mindestens der ersten Oberfläche, insbesondere des Prüfkörpers, wobei zur Fixierung bevorzugt mindestens ein Fixierelement vorliegt,
- ein Formteil umfassend eine obere Probenöffnung zum Einbringen und Positionieren eines Dentalmaterials, insbesondere eines haftenden Dentalmaterials, eines selbstadhäsiven Dentalmaterials und/oder eines nicht-adhäsiven Dentalmaterials, in der vorzugsweise zylindrischen Probenvertiefung auf die erste Oberfläche, insbesondere auf eine erste Oberfläche welche bereits mit einem haftenden Dentalmaterial, wie einem Adhäsiv, beschichtet ist,
- mindestens ein Justierelement zur Ausrichtung der Höhe und/oder Neigung (Fig. 1 a) bis g)) einer ersten Oberfläche in eine planparallele Position relativ zu mindestens einer Kontaktfläche und/oder zum unteren Rand des Formteils (Fig. 3a und Fig. 4). Vorzugsweise mit einem Winkel beta von 90° zwischen der Innenwand einer Probenvertiefung bzw. der Mittelachse M des Formkörpers und der ersten Oberfläche (Fig. 3 und Fig. 5).

Insbesondere kann die erste Oberfläche oder die Kontaktfläche entsprechend der gegenüber liegenden Kontaktfläche oder ersten Oberfläche ausgerichtet werden, insbesondere unter Verwendung der Vorrichtung umfassend ein Justierelement und ein Formteil. Somit kann die erste Oberfläche nach der Kontaktfläche ausgerichtet werden, oder die Kontaktfläche, insbesondere das Formteil, wird relativ zu der ersten Oberfläche in eine planparallele Position ausgerichtet. Im ersten Fall wird die erste Oberfläche auf dem Justierelement, wie bereits oben beschrieben, lösbar positioniert oder fest angebracht bzw. montiert und in dem zweiten Fall wird das Formteil mittels des Justierelementes nach der ersten Oberfläche ausgerichtet. Dabei wird das Formteil auf der Prüfkörperstellfläche des Justierelementes, umfassend mindestens ein Winkel verstellbares Bauteil, fest montiert und das Justierelement mittels mindestens einer Fixiervorrichtung in eine Klemmvorrichtung eingespannt, wobei die untere Probenöffnung der Probenvertiefung zur ersten Oberfläche eines unter Probenvertiefung angeordneten Prüfkörpers ausgerichtet ist. Optional kann zur Überwindung eines potentiellen Höhenunterschiedes ein Justierelement mit mindestens einem Höhen verstellbaren Bauteil unter den Prüfkörper angeordnet werden. Auf diese Weise wird ebenfalls eine planparallele Position der ersten Oberfläche zu dem unteren Rand des Formteils gewährleistet, sodass ebenfalls eine definierte und reproduzierbare Kontaktfläche und damit eine definierte und reproduzierbare Haftfläche im Haftverbund erzielt werden. Folglich tritt beim Einbringen eines Dentalmaterials, insbesondere eines haftenden, selbstadhäsiven oder nicht-adhäsiven Dentalmaterials in die Probenvertiefung des Formteils, kein Material aus, da kein Spalt zwischen erster Oberfläche und dem unteren Rand des Formteils, insbesondere der Kontaktfläche, vorliegt. Dies gewährleistet eine reproduzierbare Messung der Kraft pro Fläche, die identisch ist mit der erhaltenen Kontaktfläche des getesteten Haftverbundes nach einer Alternative (a) oder (b) wie in Fig. 5a und Fig. 5b gezeigt.

Ein weiterer Gegenstand der vorliegenden Erfindung ist ein Formteil, das einen Prüfkörper formbündig umschließt (siehe Fig. 3b und 3c), sodass die Verwendung eines Justierelementes im Sinne der Erfindung nicht zwingend erforderlich ist. Bei dieser Ausgestaltung ist der Außendurchmesser des äußeren Randes des, vorzugsweise kreisförmig ausgestalteten, Formteils identisch mit dem Außendurchmesser des Formteils, sodass die äußere Begrenzung keine Abstufungen bzw. Kanten zur Oberseite aufweist. Ferner ist die Länge des äußeren Randes ausgehend von der Oberseite länger als die Tiefe der Probenvertiefung und rangt ausgehend von einer gemeinsamen Oberseite über den unteren Rand hinaus. Durch den überragenden äußeren Rand wird der darunter mit seiner ersten Oberfläche angeordnete Prüfkörper umschlossen (Fig. 3b und 3c), sodass zwischen dem unteren Rand und der ersten Oberfläche kein Spalt auftritt und folglich kein dentales Material austreten und keine Pressfahnen entstehen können. Bei Bedarf kann diese Ausgestaltung zusätzlich mindestens eine Stütze aufweisen, wie in Fig. 3c gezeigt, die in Form von mindestens einem Fuß oder als Ring um die Probenvertiefung ausgestaltet sein kann. In einer besonderen Ausgestaltung weist das Formteil einen beweglichen äußeren Rand mit einem variablen Durchmesser auf, sodass dieser Durchmesser an den Außendurchmesser eines Prüfkörpers angepasst werden kann (nicht gezeigt). In einer besonderen Ausführungsform des Formteils ist die Probenvertiefung entlang der horizontalen Ebene flexibel (Pfeile in Fig. 3b) beweglich, sodass die Probenvertiefung zentral über der ersten Oberfläche, insbesondere Dentin und/oder Schmelz eines Zahns, positioniert werden kann. Dabei bleibt die Größe und Geometrie der Kontaktfläche unverändert. Lediglich ihre Position ist variabel. Um die gewünschte Position auf der ersten Oberfläche zu fixieren, sind geeignete Fixierelemente vorgesehen (nicht gezeigt). Eine solche Bauweise des Formteils kann für eine umfängliche Flexibilität von Vorteil sein, wenn auf die Verwendung einer komplexeren Vorrichtung verzichtet wird. Auf diese Weise kann das Formteil flexibel und gleichzeitig formbündig mit dem Prüfkörper und ohne Spalt zur ersten Oberfläche positioniert werden, sodass kein Dentalmaterial austreten und damit keine Pressfahnen entstehen können.

Bei Verwendung eines Formteils einer der vorbeschriebenen Arten wird die Entstehung von Spalten zwischen einer ersten Oberfläche und dem unteren Rand eines Formteils vermieden. Durch das bündige und bevorzugt dichte Abschließen wird eine definierte und reproduzierbare Kontaktfläche erzielt, wodurch aus der Probenvertiefung kein noch nicht ausgehärtetes Dentalmaterial austritt und die Bildung von Pressfahnen vermieden wird. Auf diese Weise werden stets definierte und reproduzierbare Haftflächen im Haftverbund erhalten und folglich eine reproduzierbare Bestimmung der Haftung eines Dentalmaterials auf einer ersten Oberfläche erzielt, bevorzugt auf einer Zahnoberfläche umfassend Schmelz und/oder Dentin, bevorzugt durch die Messung der Scherhaftung, insbesondere nach DIN EN ISO 29022. Damit werden reproduzierbare und verlässliche Aussagen über ein haftendes Dentalmaterial oder selbstadhäsives Dentalmaterial hinsichtlich seiner Haftstärke erhalten. Gleichzeitig wird aufgrund der Verhinderung von Pressfahnen und Ausbleiben des Schleifvorgangs, wie im dem Stand der Technik, Material und damit Kosten für das Verfahren eingespart.

Als weiteren Gegenstand der vorliegenden Erfindung umfasst die vorbeschriebene Vorrichtung in einer bevorzugten Ausführungsform mindestens ein Justierelement mit den folgenden Bauteilen (siehe Fig. 1a bis 1g):
i) Eine untere Standfläche , die planparallel zu einer Ebene E ist,
ii) ein oberhalb der Standfläche angeordnetes Höhen verstellbares Bauteil, das insbesondere planparallel auf einer Arbeitsfläche, insbesondere eine Stellfläche einer Klemmvorrichtung, aufgestellt werden kann, und welches in eine Bereich von größer gleich 0 mm, insbesondere bis kleiner gleich 100 mm verstellt werden, vorzugsweise in einem Bereich von größer gleich 0 mm bis kleiner gleich 100 mm, größer gleich 4 mm bis kleiner gleich 100 mm, größer gleich 4 mm bis kleiner gleich 80 mm, größer gleich 4 mm bis kleiner gleich 70 mm, von größer gleich 4 mm bis kleiner gleich 60 mm, größer gleich 4 mm bis kleiner gleich 50 mm, größer gleich 4 mm bis kleiner gleich 40 mm, und/oder
iii) ein auf dem Bauteil angeordnetes Winkel verstellbares Bauteil, das vorzugsweise ein Kugelelement umfasst, das einen Winkel alpha (exemplarisch in Fig. 1a gezeigt) zwischen einer Ebene E und einer Ebene Eₐₗₚₕₐ eingestellt werden, wobei die Ebene E der Prüfkörperstellfläche in einer zur Standfläche planparallelen Position entspricht und die Ebene Eₐₗₚₕₐ der geneigten Prüfkörperstandfläche, die an der Unterseite des Prüfkörpers anliegt, entspricht. Der Winkel alpha kann in einem Bereich von größer gleich 0' Winkelminuten, insbesondere bis kleiner gleich 60° Grad, stufenlos oder Schrittweise eingestellt werden. Vorzugsweise in einem Bereich von größer gleich 0° bis kleiner gleich 50°, größer gleich 0° bis kleiner gleich 45°, von größer gleich 0° bis kleiner gleich 40°, größer gleich 0° bis kleiner gleich 35°, größer gleich 0° bis kleiner gleich 30°, besonders bevorzugt von größer gleich 0° bis kleiner gleich 25°. Insbesondere kann der Winkel alpha in kleinen Schritten (1° = 60'Winkelminuten) von größer gleich 0', 6', 12', 24', 30', 36', 42', 48', 54', und bis kleiner gleich 60' Winkelminuten variiert werden und minimalste Neigungen von kleiner gleich 1° Grad, vorzugsweise kleiner gleich 60', 54', 48', 42', 36', 30', 24', 12', bis kleiner gleich 6' Winkelminuten fein eingestellt werden. Insbesondere ist eine Schrittweise Einstellung des Winkels alpha in einem Bereich von größer gleich 0° bis kleiner gleich 10° in Winkelminuten ['] Schritten von 30' bevorzugt, und
iv) eine obere Prüfkörper-Stellfläche, die insbesondere der Oberseite des Bauteils und/oder entspricht und mit einem Durchmesser Dₐ der vorzugsweise dem Durchmesser des Prüfkörpers, insbesondere dem Durchmesser der Unterseite des Prüfkörpers, entspricht.
v) Optional umfasst das mindestens eine Justierelement mindestens eine Arretiervorrichtung zur Fixierung der Position der eingestellten Höhe und/oder Neigung des Justierelementes, wobei die Arretiervorrichtung eine Schraube, Kontermutter oder eine andere Vorrichtung zur Blockierung aller Freiheitsgrade der Justierelementes ist, und
vi) optional mindestens ein mit der Standfläche kombiniertes, insbesondere fest verbundenes oder lösbar kombinierbares, Fixierelement zur Anbringung des Justierelementes in eine Vorrichtung, insbesondere in eine Klemmvorrichtung einer Vorrichtung. Wobei das Fixierelement eine Schraube, Kontermutter oder eine andere Vorrichtung zur Blockierung aller Freiheitsgrade der Anordnung ist, wie in Fig. 2, Fig. 4 und Fig. 7c gezeigt.

Bevorzugt umfasst das Justierelement ein Höhen verstellbares Bauteil sowie ein Winkel verstellbares Bauteil, vorzugsweise ein Kugelelement. Bevorzugt hat die Prüfkörperstellfläche eine kreisförmige Geometrie und einen Durchmesser, der so ausgestaltet ist, dass der Prüfkörper sicher aufgestellt werden kann ohne zu kippen. Vorzugsweise steht der Prüfkörper mit seiner Unterseite vollständig auf der Prüfkörperstellfläche, wie exemplarisch in Fig. 7c gezeigt. In einigen Ausgestaltungen der Prüfkörperstellfläche beträgt der Durchmesser größer gleich 0,5 cm bis kleiner gleich 10 cm, vorzugsweise größer gleich 0,8 cm bis kleiner gleich 8 cm, größer gleich 1,0 cm bis kleiner gleich 6 cm, größer gleich 2,0 cm bis kleiner gleich 8 cm, größer gleich 2,5 cm bis kleiner gleich 6,0 cm.

In einer bevorzugten Ausführungsform umfasst die vorbeschriebene Vorrichtung mindestens ein Justierelement, welches auf einer Arbeitsfläche, insbesondere mit seiner Standfläche auf der Stellfläche einer Klemmvorrichtung, nicht lösbar angebracht ist, vorzugsweise mit Hilfe mindestens eines Fixierelementes, oder lösbar auf einer Arbeitsfläche einer Vorrichtung oder Messeinrichtung positioniert wird (Fig. 4), insbesondere auf einer Stellfläche. Vorzugsweise können die Fixierelemente des mindestens einen Justierelementes in der Stellfläche der Klemmvorrichtung versenkt werden, um eine ebene und standsichere Unterseite der vollständigen Vorrichtung zu erhalten.

Bevorzugt stehen in der erfindungsgemäßen Vorrichtung, bevorzugt in einer Vorrichtung zur Herstellung eines Haftverbundes zwischen einer ersten Oberfläche, insbesondere einer Zahnoberfläche umfassend Schmelz und/oder Dentin, insbesondere in einer Vorrichtung nach DIN EN ISO 29022, die Unterseite des Prüfkörper mit der Prüfkörper-Stellfläche des Justierelementes in Kontakt.

Bevorzugt umfasst die erfindungsgemäße Vorrichtung, insbesondere nach DIN EN ISO 29022, eine Klemmvorrichtung mit mindestens einem Fixierelement, vorzugsweise Schrauben und/oder Muttern, zur Fixierung des Prüfkörpers zwischen dem mindestens einem Justierelement und dem Formteil und/oder ein Justierelement mit mindestens einer Arretiervorrichtung, zur Fixierung des Justierelementes auf der Stellfläche.

Das Justierelement ist in einer bevorzugten Ausführungsform der erfindungsgemäßen Vorrichtung zur Herstellung eines Haftverbundes zwischen einer ersten Oberfläche, insbesondere einer Zahnoberfläche umfassend Schmelz und/oder Dentin, insbesondere in einer Vorrichtung nach DIN EN ISO 29022, nicht lösbar. Insbesondere ist das auf der Stellfläche der Klemmvorrichtung nicht lösbar angebrachte und/oder lösbar auf seiner Standfläche positionierte Justierelement, vorzugsweise mit mindestens einer Arretiervorrichtung arretierte Justierelement, und der mit der Prüfkörperstellfläche des Justierelementes über seine Unterseite in Kontakt stehende Prüfkörper über die Dauer eines Verfahrens zur Herstellung mindestens eines Haftverbundes nicht lösbar, insbesondere nicht während des Aushärteprozesses eines Dentalmaterials, insbesondere nicht während der Polymerisation eines Dentalmaterials und Anhaftung des Dentalmaterials an die erste Oberfläche. Bevorzugt ist die vorbeschriebene Anordnung nicht lösbar während der Dauer der Aushärtung, insbesondere während der Polymerisation des haftenden, dentalen Materials und Anhaftung des Materials an die erste Oberfläche in einer Vorrichtung und einem Verfahren nach DIN EN ISO 29022. Ist die vorbeschriebene Anordnung kraftschlüssig verbunden, so können durch Verschiebung der einzelnen Elemente der Vorrichtung keine Erschütterungen den Prozess der Haftung negativ beeinflussen. Dadurch werden reproduzierbare Haftflächen erzielt, die bevorzugt deckungsgleich mit der Kontaktfläche zwischen einer ersten Oberfläche und mindestens einer zweiten Oberfläche umfassend das mindestens eine Dentalmaterial sind.

Eine auf die vorbeschrieben Weise hergestellter, reproduzierbarer Haftverbund, unter Verwendung eines Justierelementes in einer Vorrichtung hat einen positiven Einfluss auf den zweiten Teil des gesamten Verfahrens wie Eingangs beschrieben. Der zweite Teil des Verfahrens betrifft die Messung der Haftung bzw. der Scherhaftung. Für diese Verfahren wird eine Vorrichtung zur Ausübung einer Zug-, Schub-, und/oder Scherkraft verwendet, die ein Kraft ausübendes Formteil aufweist, das den dreidimensionalen Formkörper entlang der Längsachse M (siehe Fig. 5) des Formkörpers, wie in Fig. 6 gezeigt, mindestens teilweise formbündig ohne direkten Kontakt umrandet und nur mit einer minimalen Kraft- bzw. Kontaktfläche an der Außenfläche des Formkörpers in direkten Kontakt steht.

Ein weiterer Gegenstand der vorliegenden Erfindung ist ein Verfahren zur Herstellung mindestens eines Haftverbundes an einer, insbesondere definierten und reproduzierbaren Kontaktfläche zwischen einer ersten Oberfläche, insbesondere eines Prüfkörpers, und mindestens einer zweiten Oberfläche, insbesondere eines Formkörpers, insbesondere ein Verfahren zur Herstellung mindestens eines Haftverbundes nach DIN EN ISO 29022, bevorzugt DIN EN ISO 29022:2013, umfassend die Schritte
a) Positionieren eines Prüfkörpers mit seiner Unterseite, umfassend die erste Oberfläche, vorzugsweise eine Dentin- und/oder Zahnschmelz- Oberfläche eines Zahns, auf der Prüfkörperstellfläche eines Justierelement, wobei (i) zuerst das Justierelement in die Vorrichtung eingebracht wird und anschließend der Prüfkörper mit der abgewandten Seite auf die Prüfkörperstellfläche gestellt wird, oder (ii) zuerst der Prüfkörper mit der abgewandten Seite auf die Stellfläche gestellt wird und anschließend das Justierelement zwischen Prüfkörper und Stellfläche eingebracht wird, oder (iii) zuerst außerhalb der Klemmeinrichtung der Prüfkörper mit der abgewandten Seite auf die Prüfkörperstellfläche des Justierelementes gestellt wird,
b) Ausrichten der erste Oberfläche, insbesondere des Prüfkörpers, in eine planparallel Position relativ zur Kontaktfläche, insbesondere zum unteren Rand eines Formteils, und in einem Winkel beta von 90° zur Innenwand einer Probenvertiefung des Formteils, wobei (i) das Ausrichten nach a) (i) und (ii) in der Klemmvorrichtung erfolgt, oder (ii) das Ausrichten nach a) (iii) außerhalb der Klemmvorrichtung erfolgt,
c) In Kontakt bringen der ersten Oberfläche, insbesondere eines Prüfkörpers, mit dem unteren Rand der unteren Probenöffnung eines Formteils, wobei der untere Rand bündig, vorzugsweise ohne Spalten, mit der ersten Oberfläche abschließt und Erhalten einer definierten abgrenzten Kontaktfläche (Fig. 3a),
d) Einbringen eines Dentalmaterials durch die obere Probenöffnung in die Probenvertiefung, vorzugsweise in die zylindrische Probenvertiefung, des Formteils und insbesondere auf die erste Oberfläche, sodass das noch nicht ausgehärtete selbstadhäsive oder nicht-adhäsive Dentalmaterial mit der, optional bereits mit einem haftenden Dentalmaterial beschichteten, ersten Oberfläche an der Kontaktfläche in Kontakt tritt und diese vollständig bedeckt,
e) Bilden mindestens eines Haftverbundes an der Kontaktfläche zwischen der ersten Oberfläche und mindestens einer zweiten Oberfläche eines Dentalmaterials, wobei das noch nicht ausgehärtete Dentalmaterial an der, optional mit einem haftenden Dentalmaterial beschichteten, ersten Oberfläche anhaftet und anschließend aushärtet, wodurch die zweite Oberfläche mit der ersten Oberfläche an der Haftfläche verbunden ist und
f) Erhalten eines Haftverbundes in Form eines dreidimensionalen Formkörpers nach einer Alternative (a) oder nach einer Alternative (b).

Alternativ kann Schritt c) vor Schritt b) erfolgen, wobei bei einer vorhanden Schräg- bzw Schieflage eine Ausrichtung der erste Oberfläche in eine planparallel Position relativ zur Kontaktfläche und in einem Winkel beta von 90° zur Innenwand einer Probenvertiefung des Formteils erfolgt, bis die erste Oberfläche mit dem unteren Rand der unteren Probenöffnung des Formteils bündig abschließt.

In einer bevorzugten Ausführungsform des Verfahrens erfolgt erfindungsgemäß das Ausrichten (b) der ersten Oberfläche des Prüfkörpers mittels mindestens eines Justierelementes durch Verstellen der Höhe und/oder der Neigung des Justierelementes relativ zur Kontaktfläche und dem unteren Rand des Formteils in eine planparallele Anordnung der Oberflächen zu einander und in einem Winkel beta von 90° zur Innenwand der Probenvertiefung, wobei
i) der Winkel alpha einstellbar ist in einem Bereich von größer gleich 0' Winkelminuten, insbesondere bis kleiner gleich 60° zwischen einer Ebene E des Justierelementes und der Unterseite des Prüfkörpers, insbesondere einer Ebeneₐₗₚₕₐ, wie exemplarisch in Fig. 1a gezeigt, und/oder
ii) die Höhe einstellbar ist in einem Bereich von größer gleich 0 mm, insbesondere bis kleiner gleich 100 mm und
optional erfolgt anschließend eine Arretierung der eingestellten Position mittels mindestens einer Arretiervorrichtung und eine Fixierung des vorbeschriebenen Aufbaus mittels mindestens eines Fixierelementes auf einer Arbeitsfläche, vorzugsweise Stellfläche einer Klemmvorrichtung.

Das Formteil kann im Verfahren vor oder nach b) Ausrichten der ersten Oberfläche eines Prüfkörpers in der Klemmvorrichtung angebracht werden. In einer Ausführungsform des Verfahrens im Sinne der Erfindung wird das Formteil auf den Prüfkörper aufgebracht bevor oder nachdem b) die erste Oberfläche ausgerichtet worden ist, wobei das Formteil derart ausgebildet ist, dass der äußere Rand einen Innendurchmesser aufweist, der dem Außendurchmesser des Prüfkörpers entspricht und der Prüfkörper von dem äußeren Rand an der Außenwand bündig umschlossen wird (siehe Fig. 3b und 3c).

Insbesondere kann die erste Oberfläche nach Ausrichten und vor Aufbringen des Formteils durch mindestens eine Arretiervorrichtung in der gewählten Position fixiert werden. Wo erforderlich, kann das Justierelement mittels mindestens eines Fixierelementes an einer Arbeitsfläche befestigt werden, insbesondere auf eine Stellfläche einer Klemmvorrichtung.

In einer besonderen Ausgestaltung des Verfahren wird c) beim in Kontakt bringen eine definierte Kontaktfläche (Fig. 3a) erhalten, wobei die Innenwand einer Probenvertiefung und der untere Rand der unteren Probenöffnung einer Probenvertiefung bündig und ohne Spalten mit einer ersten Oberfläche abschließt, insbesondere einer bereits mit einem Adhäsiv beschichtet, ersten Oberfläche eines Prüfkörper. Dabei liegt das Formteil mit mindestens seinem unteren Rand der Probenvertiefung auf dem Prüfkörper auf (siehe Fig. 3a) und die erste Oberfläche ist gleichzeitig von dem unteren Rand abschließend umrandet, wobei die erste Oberfläche innerhalb der Probenöffnung angeordnet ist und den Boden der Probenöffnung bildet (siehe Fig. 3a und Fig. 3c). Auf diese Weise wird eine definierte Kontaktfläche erhalten, die der Haftfläche des Haftverbundes zwischen einer ersten Oberfläche, bevorzugt eine Schmelz- und/oder Dentinoberfläche, und einer zweiten Oberfläche umfassend ein Dentalmaterial, insbesondere ein haftendes, selbstadhäsives und/oder nicht-adhäsives Dentalmaterial, entspricht. Optional ist die erste Oberfläche mit einem haftenden Dentalmaterial bereits beschichtet bevor ein nicht-adhäsives Dentalmaterial aufgebracht wird. Ferner wird auf diese Weise eine vollständig abgeschlossene Kontaktfläche erhalten, wobei der untere Rand mit seinem vollen Umfang auf dem Prüfkörper aufliegt und damit ein Austreten eines Dentalmaterials verhindert. Dadurch wir die Entstehung von Pressfahnen verhindert und letztlich in einem Verfahren zur Bestimmung der Haftung mindestens eines Dentalmaterials, insbesondere der Scherhaftung nach DIN EN ISO 29022, reproduzierte Messwerte in Kraft pro Fläche gleich Haftfläche erhalten.

Folglich ist ein weiterer Gegenstand der vorliegenden Erfindung ein Haftverbund zwischen einer ersten Oberfläche und einer zweiten Oberfläche, jeweils wie in der vorliegend Erfindung beschrieben, mit einer definierten Kontaktfläche, wie oben beschrieben und erhältlich in dem hier beschriebenen Verfahren zur Herstellung eines Haftverbundes an einer Kontaktfläche.

Bevorzugt wird vor d) dem Einbringen eines Dentalmaterials die beschriebene Anordnung, wie in Fig. 2, Fig. 4 und Fig. 7c gezeigt, umfassend den Prüfkörper unterhalb des Formteils und das Justierelement unterhalb des Prüfkörpers, durch mindestens ein Fixierelement in der Klemmvorrichtung fixiert. Insbesondere erfolgt die Fixierung bis zur Dichtigkeit an der Kontaktfläche zwischen der ersten Oberfläche und dem unteren Rand der Probenvertiefung, wenn nicht schon durch die planparallele Ausrichtung eine Dichtigkeit erzielt worden ist, um ein Austreten eines Dentalmaterials zu verhindern.

Die Schritte d), e) und f) variieren abhängig von der gewünschten Anordnung (Fig. 5a bis c) bzw. Aufbau des dreidimensionalen Formkörpers, insbesondere umfassend mindestens einen Haftverbund. Daher wird bevorzugt im vorbeschriebenen Verfahren in Schritt d) mindestens ein selbstadhäsives Dentalmaterial in die Probenvertiefung auf eine erste Oberfläche eingebracht und f) ein Haftverbund nach Alternative (a) erhalten (Fig. 5a) oder in Schritt d) wird mindestens ein nicht-adhäsives Dentalmaterial in die Probenvertiefung auf mindestens eine Zwischenschicht enthaltend mindestens ein haftendendes Dentalmaterial aufgebracht, wobei die mindestens eine Zwischenschicht an der ersten Oberfläche haftet und f) ein Haftverbund nach einer Alternative (b) erhalten wird (Fig. 5b, c).

Um einen Haftverbund nach einer Alternative (a) zu erhalten (siehe Fig. 5a) wird, wie oben beschrieben, auf die erste Oberfläche, vorzugsweise Schmelz und/oder Dentin, d) ein selbstadhäsives Dentalmaterial aufgebracht, wobei selbstadhäsive Dentalmaterialien umfassen Ein- und Zwei-Komponenten Dentalmaterialien umfassend dentale selbstadhäsive Polymere, selbstadhäsive Kompositmaterialien, selbstadhäsive Füllungsmaterialien/-kunststoffe, selbstadhäsive Verblendmaterialien/-kunststoffe, selbstadhäsive Prothesenkunststoffe, selbstadhäsive Stumpfaufbauten, selbstadhäsive Zemente und selbstadhäsive Fissurenversiegler. Anschließend wird e) ein Haftverbund an der Kontaktfläche zwischen der ersten Oberfläche und dem selbstadhäsiven Dentalmaterial gebildet, wobei das noch nicht ausgehärtete, selbstadhäsive Dentalmaterial an der ersten Oberfläche anhaftet und anschließend oder während dessen aushärtet, wodurch die zweite Oberfläche des selbstadhäsiven Dentalmaterials mit der ersten Oberfläche an der Haftfläche verbunden ist und damit f) ein Haftverbund in Form eines dreidimensionalen Formkörpers nach einer Alternative (a) erhalten wird (Fig. 5a).

Um einen Haftverbund nach einer Alternative (b) zu erhalten (siehe Fig. 5b und Fig. 5c) wird zunächst ein haftendes Dentalmaterial auf die erste Oberfläche aufgetragen, wobei haftende Dentalmaterialien umfassen Adhäsive, Adhäsive für Zahn-Kunststoff-Klebung, Adhäsive für Zahn-Keramik-Klebung, Adhäsive für Zahn-Metall-Klebung, Adhäsive für Metall-Kunststoff-Klebung, Adhäsive für Metall-Keramik-Klebung, Adhäsive für Keramik-Kunststoff-Klebung, Adhäsive für Kunststoff-Kunststoff-Klebung, Adhäsive für Keramik-Keramik-Klebung. Dieser Schritt kann entweder bereits vor Schritt a) oder erst in Schritt d) erfolgen, wobei in beiden Fällen ein erster Haftverbund zwischen der ersten Oberfläche und dem haftenden Dentalmaterial gebildet wird. In der ersten Variante wird eine erweiterte Zwischenschicht erhalten, wie in Fig. 5c gezeigt, und bei der zweiten Variante wird mindestens eine mit der Kontaktfläche deckungsgleiche Zwischenschicht erhalten, wie in Fig. 5b gezeigt. Anschließend werden bei der ersten Variante die Schritte a) bis c), wie oben beschrieben, durchgeführt. In beiden Varianten erfolgt als nächstes d) das Einbringen mindestens eines nicht-adhäsiven Dentalmaterials auf das haftende, bereits ausgehärtete, Dentalmaterial in Form mindestens einer Zwischenschicht. Nicht-adhäsive Dentalmaterialien umfassen Ein- und Zwei-Komponenten Dentalmaterialien umfassend dentale Polymere, Kompositmaterialien, Füllungsmaterialien/-kunststoffe, Verblendmaterialien/-kunststoffe, Zement, Kompositzemente, Silikatzemente, Glas-Ionomer-Zemente (Glas-Polyalkenoat-Zemente), lichthärtende Zemente, Cermet-Zemente Stumpfaufbauten und Fissurenversiegler. In einem nächsten Schritt e) wird der zweite Haftverbund zwischen der mindestens einen Zwischenschicht eines haftenden Dentalmaterials, insbesondere Adhäsivs, und mindestens einem nicht-adhäsiven Dentalmaterial gebildet und damit f) ein Haftverbund in Form eines dreidimensionalen Formkörpers nach einer Alternative (b) erhalten. Darin haftet die Zwischenschicht mit einer inneren Oberfläche an die erste Oberfläche und mit einer anderen inneren Oberfläche, insbesondere mit der ersten inneren Oberfläche gegenüberliegenden inneren Oberflächen, an das nicht-adhäsive Dentalmaterial. Insbesondere ist die mindestens eine Zwischenschicht ein Haftvermittler zwischen der ersten Oberfläche und einem Dentalmaterial, insbesondere einem nicht-adhäsiven Dentalmaterial.

Bevorzugt wird in dem erfindungsgemäßen Verfahren die erhaltene Kontaktfläche in Schritt d) mindestens mit dem Dentalmaterial, vorzugsweise vollflächig, bedeckt und maximal die Probenvertiefung bis zum oberen Rand mit, insbesondere dem selbstadhäsiven oder nicht-adhäsiven, Dentalmaterial ausfüllt. Dabei wird eine definierte Menge des Dentalmaterials eingebracht, wobei die verwendete Menge reproduzierbar ist, da durch die Vermeidung von Spalten zwischen dem unteren Rand und der ersten Oberflächen kein Dentalmaterial austreten kann. Durch das erfindungsgemäße Verfahren wird nicht nur mindestens eine reproduzierbare Haftfläche und damit reproduzierbare Messung der Kraft pro Fläche des Haftverbundes nach Alternative (a) oder (b) erzielt, sondern auch eine signifikante Materialeinsparung. Ferner ist gemäß dem erfindungsgemäßen Verfahren eine Definition des erforderlichen Volumens des jeweils eingesetzten Dentalmaterials abhängig von der Größe und des Volumens einer Probenvertiefung eines Formteils möglich. Dies ermöglicht eine verlässliche Kostenkalkulation des Verfahrens und eine einfache Durchführung des Verfahrens.

Erfindungsgemäß wird in dem Verfahren e) ein Haftverbund, insbesondere nach Alternative (a) oder (b), im Wesentlichen an der Kontaktfläche gebildet und nach Aushärten, vorzugsweise lichtvermittelte Polymerisation, des Dentalmaterials sowie Entfernen des Formteils ein dreidimensionaler Formkörper erhalten (Fig. 5a, b und c). Der ausgehärtete dreidimensionale Formkörper umfassend den mindestens einen Haftverbund an der definiert begrenzten Kontaktfläche, insbesondere erhältlich in dem hier beschriebenen Verfahren, ist ebenfalls ein Gegenstand der vorliegenden Erfindung. Um Material, insbesondere des haftenden Dentalmaterials, einzusparen und eine definierte Haftfläche des haftenden Dentalmaterials in Form mindestens einer Zwischenschicht zur ersten Oberfläche zu erhalten, ist ein Haftverbund nach einer Alternative (b) bevorzugt, wie schematisch in Fig. 5b gezeigt. Insbesondere weist der Formkörper eine Geometrie auf, die der Negativform der Probenvertiefung eines Formteils entspricht (siehe Fig. 3a-c und Fig. 5a, b und c). Bevorzugt ist die Geometrie des Formkörpers auf die Geometrie eines Formteils einer Vorrichtung angepasst, oder das Formteil ist auf die Geometrie des Formkörpers abgestimmt. Auf diese Weise kann in einem Verfahren zur Messung der Haftung eines Dentalmaterials an einer ersten Oberfläche eine optimale Positionierung des Formteils erhalten werden.

Daher ist ein weiterer Gegenstand der Erfindung ein Verfahren zur Bestimmung der Haftfestigkeit mindestens eines Dentalmaterials an einer ersten Oberfläche in einem Haftverbund, insbesondere ein Haftverbund nach einer Alternative (a) oder (b), wobei dieser an der Kontaktfläche zwischen der ersten Oberfläche und mindestens einer zweiten Oberfläche besteht und die Kontaktfläche der Fläche entspricht, die durch einen unteren Rand der unteren Probenöffnung, einer Innenwand einer Probenvertiefung eines Formteils und der unterhalb des unteren Randes des Formteils angeordneten ersten Oberfläche abgegrenzt wird (Fig. 3a) und erhältlich nach dem vorbeschriebenen erfindungsgemäßen Verfahren unter Verwendung der Vorrichtung. Das Verfahren zur Bestimmung der Haftfestigkeit umfasst die Schritte
a) Einspannen eines dreidimensionalen Formkörpers, insbesondere eines auf einer ersten Oberfläche haftenden Formkörpers, insbesondere nach einer Alternative (a) oder (b), in eine Vorrichtung umfassend ein Formteil zur Kraftausübung,
b) Ausüben eine Scher, Schub- und/oder Zugkraft auf mindestens einen Haftverbund an der Kontaktfläche und
c) Messen der im Zeitpunkt des Bruches des mindestens einen Haftverbundes aufgebrachten Scher-, Schub- und/oder Zugkraft.

Bevorzugt a) umschließt in dem oben beschriebenen Verfahren das Formteil den dreidimensionalen Formkörper entlang seiner Längsachse zumindest teilweise formbündig ohne mit der Außenfläche in direkten Kontakt zu treten, und b) die Kraft wird im Wesentlichen durch das Formteil an einer minimalen Kraft- bzw. Kontaktfläche an der Außenfläche des Formkörpers ausgeübt, wobei das Formteil nur an dieser Kontaktfläche den Formkörper möglichst nahe an der Kontaktfläche berührt, vorzugsweise direkt an der Kontaktfläche berührt, und c) die Haftfestigkeit des Haftverbundes, insbesondere nach einer Alternative (a) oder (b) in Kraft pro Kontaktfläche, wie oben beschrieben, gemessen wird.

In dem Verfahren zur Bestimmung der Haftfestigkeit mindestens eines Dentalmaterials an einer ersten Oberfläche, vorzugsweise eines Verfahrens zur Messung der Scherhaftung und/oder Haftfestigkeit nach DIN EN ISO 29022, bevorzugt DIN EN ISO 29022:2013, wird die Haftung in mindestens einem Haftverbund geprüft, insbesondere nach einer Alternative (a) oder (b), zwischen einer ersten Oberfläche und mindestens einer zweiten Oberfläche, oder in einem Haftverbund zwischen einer ersten Oberfläche und einer Zwischenschicht und einer Zwischenschicht und mindestens einer zweiten Oberfläche, wobei
a) die erste Oberfläche ausgewählt wird aus (1) natürlichen und/oder (2) synthetischen dentalen Oberflächen umfassend
   (1) natürliche Oberflächen der humanen und tierischen Mundhöhle, wie Zähne, insbesondere Säugetier-Zähne, wie Rinderzähne, Zahnschmelz (Enamel), Zahnbein (Dentin), Wurzelzement und Wurzelhaut sowie humane und tierische Knochen des Unterkiefers und Oberkiefers, und/oder
   (2) synthetische Oberflächen umfassend Prothesen, Gerüstwerkstoffe für Brücken und Kronen, Implantate, Knochenersatzmaterialien, Füllungsmaterialien, Wurzelfüllungsmaterialien, und Verblendmaterialien jeweils umfassend Werkstoffe ausgewählt aus Metall, Schwermetall, Titan, Legierungen, insbesondere Au, Pt, Ag, Cu, Zn, In, Ir, Pd, Sn, Co, Cr, Ni, Mo, W, Mn, Fe, Si, N und/oder Ru, Zemente umfassend Silikatzemente, Glas-Ionomer-Zemente (Glas-Polyalkenoat-Zemente), lichthärtende Zemente und Cermet-Zemente, Keramik, Zirkonoxid, Glas, Kunststoffe und Kombinationen aus mindestens zwei der vorgenannten Werkstoffe, und
b) mindestens eine zweite Oberfläche für einen Haftverbund nach einer Alternative (a) (Fig. 5a) ausgewählt wird aus
   (1) selbstadhäsiven Dentalmaterialien umfassend Ein- und Zwei-Komponenten Dentalmaterialien umfassend dentale selbstadhäsive Polymere, selbstadhäsive Kompositmaterialien, selbstadhäsive Füllungsmaterialien/-kunststoffe, selbstadhäsive Verblendmaterialien/-kunststoffe, selbstadhäsive Prothesenkunststoffe, selbstadhäsive Stumpfaufbauten, selbstadhäsive Fissurenversiegler und selbstadhäsive Zementwerkstoffe, Säure-modifizierte Glas-Ionomer-Zemente und/oder
   (2) haftenden Dentalmaterialien umfassend Adhäsive, Adhäsive für Zahn-Kunststoff-Klebung, Adhäsive für Zahn-Keramik-Klebung, Adhäsive für Zahn-Metall-Klebung, Adhäsive für Metall-Kunststoff-Klebung, Adhäsive für Metall-Keramik-Klebung, Adhäsive für Keramik-Kunststoff-Klebung, Adhäsive für Kunststoff-Kunststoff-Klebung, Adhäsive für Keramik-Keramik-Klebung, oder
   mindestens eine zweite Oberfläche für einen Haftverbund nach einer Alternative (b) (Fig. 5b und 5c) ausgewählt wird aus
   (3) nicht-adhäsiven Dentalmaterialien umfassend Ein- und Zwei-Komponenten Dentalmaterialien umfassend dentale Polymere, Kompositmaterialien, Füllungsmaterialien/-kunststoffe, Verblendmaterialien/-kunststoffe, Zement, Kompositzemente, Silikatzemente, Glas-Ionomer-Zemente (Glas-Polyalkenoat-Zemente), lichthärtende Zemente, Cermet-Zemente, Stumpfaufbauten und Fissurenversiegler, wobei die mindestens zweite Oberfläche auf mindestens einem haftenden Dentalmaterial in Form mindestens einer Zwischenschicht vorliegt.

Ein weiterer Gegenstand der vorliegenden Erfindung ist ein Verfahren zu Herstellung eines Haftverbundes und ein Verfahren zur Bestimmung der Scherhaftung jeweils nach DIN EN ISO 2902, unter Einhaltung der darin definierten Normen.

Ebenfalls Gegenstand der Erfindung ist die Verwendung der erfindungsgemäßen Vorrichtung zur Herstellung mindestens eines Haftverbundes an mindestens einer Kontaktfläche zwischen einer ersten Oberfläche und mindestens einer zweiten Oberfläche umfassend ein Dentalmaterial, zur Herstellung eines dreidimensionalen Formkörpers umfassend mindestens einen Haftverbund zwischen einer ersten Oberfläche und mindestens einer zweiten Oberfläche, zur Herstellung eines Haftverbundes nach DIN EN ISO 29022, zur Herstellung eines dreidimensionalen Formkörpers umfassend mindestens einen Haftverbund nach DIN EN ISO 29022, zur Herstellung eines Haftverbundes zur Verwendung in einem Verfahren zur Bestimmung der Kraft, die zur Trennung oder zum Bruch des mindestens einen Haftverbundes aufgebracht werden muss und Verwendung eines erfindungsgemäßen Haftverbundes, insbesondere nach einer Alternative (a) oder (b), in einem Verfahren zur Messung der Haftfestigkeit eines haftenden Dentalmaterials oder eines selbstadhäsiven Dentalmaterials auf einer ersten Oberfläche, insbesondere Dentin oder Schmelz und in einem Verfahren zur Bestimmung der Scherhaftung nach DIN EN ISO 29022.

Die Abbildungen zeigen schematische Darstellung der Erfindung und erläutern diese näher, ohne die Erfindung auf die Darstellungen in den Abbildungen zu beschränken.

### Beschreibung der Abbildungen

- Fig.1 a) bis g): Justierelement 10 und Ausführungsformen des Justierelementes 10
- Fig. 1a): zeigt einen Querschnitt eines Justierelementes 10 mit einer Prüfkörper-stellfläche 14, einem Winkel verstellbaren Bauteil 13 als Kugelausgleichselement 13 und einer Standfläche 11; der verstellbare Winkel alpha zwischen der gedachten Ebene E und Ebene Eₐₗₚₕₐ und die aus dem Winkel alpha resultierte Höhenverschiebung sind durch Pfeile gekennzeichnet.
- Fig. 1b): zeigt einen Querschnitt eines Justierelementes 10 mit einer Prüfkörper-stellfläche 14, einem oberen Winkel verstellbaren Bauteil 13 sowie einem darunter angeordneten Höhe verstellbaren Bauteil 12 auf einer Standfläche 11; der verstellbare Winkel alpha an der Ebene E sowie die niedrigste Höhe H als auch die maximale Höhe Hₘₐₓ des Höhe verstellbaren Bauteils 12 sind durch Pfeile gekennzeichnet.
- Fig. 1c): zeigt einen Querschnitt eines Justierelementes 10 mit einer Prüfkörper-Stellfläche 14 und einem Höhe verstellbaren Bauteil 12 auf einer Standfläche 11; sowohl die niedrigste Höhe (H) als auch die maximale Höhe (Hₘₐₓ) sind dargestellt.
- Fig. 1d): zeigt die Aufsicht auf eine Prüfkörper-Stellfläche 14 eines Justierelementes 10 mit einem äußeren Durchmesser D_{A}.
- Fig.1e): zeigt einen Querschnitt eines Justierelement 10 mit einem Kugelausgleichselement als Winkel verstellbares Bauteil 13 und mindestens einem Fixierelement 16 zur Anbringung eines Justierelementes 10 in/auf eine Vorrichtung zur Herstellung eines Haftverbundes 20 und/oder Klemmvorrichtung 30; Das Justierelement ist mit seiner Standfläche 11 und den mindestens einem Fixierelement auf einer Stellfläche 32 einer Vorrichtung 20 zur Herstellung eines Haftverbundes und/oder Klemmvorrichtung 30 positioniert.
- Fig. 1f): zeigt einen Querschnitt eines Justierelement 10 mit einer Prüfkörper-Stellfläche 14, einem Höhe verstellbaren Bauteil 12 sowie mindestens eine äußere Arretiervorrichtung 15 zur Fixierung der eingestellten Höhe des Justierelementes 10; sowohl die niedrigste Höhe (H) als auch die maximale Höhe (Hₘₐₓ) ist dargestellt.
- Fig. 1g): zeigt einen Querschnitt einer Anordnung umfassend einen Prüfkörper 60, der mit seiner Unterseite 62 auf der Prüfkörperstellfläche 14 eines Justierelementes 10 positioniert ist, wobei die Neigung des Prüfköpers 60 entlang einer Ebene E durch das Winkel verstellbare Bauteil 13 mit einem Winkel alpha ausgeglichen wird und ein unter dem Winkel verstellbaren Bauteil 13 angeordnetes Höhe verstellbares Bauteil 12 sowie mindestens eine äußere Arretiervorrichrung zur Fixierung des eingestellten Winkels und Höhe des Justierelementes 10, wobei das Justierelement 10 mit seiner Standfläche 11 auf einer Arbeitsfläche 32 einer Vorrichtung 20 zur Herstellung eines Haftverbundes und/oder Klemmvorrichtung 31 positioniert ist.
- Fig. 2: Zeigt eine Anordnung einer Vorrichtung 20 zur Herstellung eines Haftverbundes umfassend die Bauteile: eine Klemmvorrichtung 30 mit zwei Fixierelementen 31, insbesondere Muttern, einen Prüfkörper 60 mit seiner Unterseite 62 ausgerichtet zur Prüfkörperstellfläche 14 eines Justierelementes 10, das auf der Stellfläche 32 einer Klemmvorrichtung 30 angeordnet ist; ein Formteil 40 ist oberhalb einer ersten Oberfläche 61, die gleichzeitig die Oberseite des Prüfkörpers 60 ist, angeordnet, wobei die untere Probenöffnung 41 der Probenvertiefung 46 des Formteils 40 zur ersten Oberfläche 61 ausgerichtet ist und die obere Probenöffnung 43 zum oberen Teil der Klemmvorrichtung 30 ausgerichtet ist.
- Fig. 3a: zeigt einen detaillierten Querschnitt eines Formteil 40 angeordnet oberhalb eines Prüfkörpers 60, umfassend eine Probenvertiefung 46 zur Aufnahme eines Dentalmaterials 70 über eine obere Probenöffnung 43, mit einer Innenwand 45 und einer unteren Probenöffnung 41, die vom unteren Rand 42 abgegrenzt ist sowie einen äußeren Rand 44 des Formteils 40; Bei Verwendung des Formteils steht der untere Rand 42 mit der ersten Oberfläche 61 eines Prüfkörpers 60 in Kontakt und der äußere Rand 44 liegt auf dem Prüfkörper 60 innerhalb des Durchmessers des Prüfkörpers 60,insbesondere auf dem Einbettungsmaterial 67, auf.
- Fig. 3b: zeigt einen detaillierten Querschnitt eines Formteils 40 wie in Fig. 3a, wobei der äußere Rand 44 in dieser Ausführungsform gleichzeitig die äußere Kante des Formteils 40 ist und der äußere Rand 44 ausgehend von der Oberseite 48 des Formteils 40 länger ist als die Tiefe der Probenvertiefung 46. In dieser Ausführungsform liegt der äußere Rand 44 nicht auf dem Prüfkörper 60 auf, sondern umrandet den Prüfkörper 60 wie in Fig. 3c gezeigt.
- Fig. 3c: zeigt einen detaillierten Querschnitt eines Formteils 40 wie in Fig. 3b, wobei zusätzlich mindestens eine Stütze 47 zur Stabilisierung der Position des Formteils 40 auf einem Prüfkörper 60 vorhanden ist.
- Fig. 4: zeigt einen Querschnitt einer zusammen geklemmten Vorrichtung 20 mit einem analogen Aufbau wie in Fig. 2 gezeigt, wobei die Neigung eines Prüfkörpers 60 und der ersten Oberfläche 61 analog zur Fig. 1 g) an einer Ebene E mittels eines Justierelementes 10 planparallel zum unteren Rand 42 des Formteils 40 ausgerichteten worden ist, wobei das Justierelement 10 mittels der Fixierelemente 16 und die gesamte Anordnung wie oben beschrieben durch Fixierelemente 31 auf einer Stellfläche 32 fixiert worden ist.
- Fig. 5a: zeigt eine perspektivische Ansicht eines Haftverbundes nach einer Alternative (a), worin der dreidimensionale Formkörper 71 ein haftendes Dentalmaterial 70 oder ein selbstadhäsives Dentalmaterial 70 umfasst, das an der Kontaktfläche 21 die mindestens zweite Oberfläche 72 bildet, die mit der ersten Oberfläche 61, insbesondere Schmelz und/oder Dentin, in Kontakt steht. Im erfindungsgemäßen Haftverbund sind nach Aushärtung des haftenden Dentalmaterials oder selbstadhäsiven Dentalmaterials 70 keine Pressfahnen vorhanden.
- Fig. 5b: zeigt eine perspektivische Ansicht eines Haftverbundes nach einer Alternative (b), worin der dreidimensionale Formkörper 71 ein nicht-adhäsives Dentalmaterial 70 und eine Zwischenschicht 90 umfasst, wobei die Zwischenschicht 90 an der Kontaktfläche 21 mit der ersten Oberfläche 61 in Kontakt tritt und mit ihrer der Kontaktfläche 21 abgewandten Oberfläche mit der mindestens zweiten Oberfläche 72 eines nicht-adhäsiven Dentalmaterial verbunden ist. In dieser Ausführungsform wurde das haftende Dentalmaterial 70 nach Ausrichten des Prüfkörpers in der Vorrichtung 20 in das Formteil 40 eingebracht und somit weist die Zwischenschicht eine mit der Kontaktfläche 21 identische Fläche auf. Im erfindungsgemäßen Haftverbund sind nach Aushärtung des haftenden Dentalmaterials und des nicht-adhäsiven Dentalmaterials 70 keine Pressfahnen vorhanden.
- Fig. 5c: wie Fig. 5b, wobei in dieser Ausführungsform das haftende Dentalmaterial 70 bereits vor dem Ausrichten des Prüfkörpers in der Vorrichtung 20 auf der ersten Oberfläche 61 aufgetragen worden ist und anschließend unter dem Formteil 40 ausgerichtet worden ist. Dadurch ragt die Zwischenschicht 90 über die Kontaktfläche 21 hinaus, wobei nach Aushärtung des nicht-adhäsiven Dentalmaterials 70 ebenfalls keine Pressfahnen vorhanden sind.
- Fig. 6: zeigt einen Querschnitt einer Anordnung, in der der an der ersten Oberfläche 61 haftende Formkörper 71 in eine Vorrichtung 50 zur Ausübung einer Kraft auf den Haftverbund an der Kontaktfläche 21 eingespannt ist, wobei die erste Oberfläche 61 die Oberfläche eines Zahns 64 ist, insbesondere die Dentinoberfläche 66 unterhalb des Zahnschmelzes 65, eingebettet in einem Prüfköper 60 und wobei die Vorrichtung 50 entlang der Außenfläche 73 des Formkörpers 71 mit dem Formteil 51 formbündig angeordnet ist und an der Kraft- bzw. Kontaktfläche 74 mit dem Formkörper 71 in Kontakt tritt.
- Fig. 7a): zeigt einen Prüfkörper 60, der eine schräge Unterseite 62 aufweist.
- Fig. 7b): zeigt eine perspektivische Seitenansicht einer Vorrichtung zur Herstellung eines Haftverbundes nach dem Stand der Technik, bei der nach dem Fixieren des nicht planparallelen Prüfkörpers 60 ein Spalt 80 zwischen der ersten Oberfläche 61 eines Prüfkörpers 60 und dem unteren Rand 42 der Probenvertiefung 46 eines Formteils 40 entsteht.
- Fig. 7c): zeigt einen im Sinne der Erfindung planparallel ausgerichteten Prüfkörper 60 mit schräger Unterseite 62, positioniert auf der Prüfkörperstellfläche 14 eines Justierelementes 10, wobei die erste Oberfläche 61 planparallel zum unteren Rand 42 und dem äußeren Rand 44 ausgerichtet ist und bündig mit dem Formteil in Kontakt steht, ohne dass ein Spalt zwischen der unteren Probenöffnung 41 und der ersten Oberfläche 61 vorliegt.

### Bezugszeichen

- 10: Justierelement zur Ausrichtung der Höhe und/oder Neigung einer Oberfläche
- 11: Standfläche des Justierelementes 10
- 12: Höhe verstellbares Bauteil des Justierelementes 10
- 13: Winkel verstellbares Bauteil, insbesondere Kugelelement, des Justierelementes 10
- 14: Prüfkörperstellfläche des Justierelementes 10
- 15: Arretiervorrichtung zur Fixierung der eingestellten Höhe und/oder Neigung des Justierelementes 10
- 16: Fixierelement zur Anbringung des Justierelementes 10 in einer Vorrichtung 20 und/oder in einer Klemmeinrichtung 30
- 20: Vorrichtung, insbesondere Vorrichtung zur Herstellung eines Haftverbundes
- 21: Kontaktfläche, insbesondere Kontaktfläche des dreidimensionalen Formkörpers 71 in einem Haftverbund zwischen einer ersten Oberfläche 61 des Prüfkörpers 60, z.B. eines Zahns, und einer zweiten Oberfläche 72
- 30: Klemmeinrichtung
- 31: Fixierelement
- 32: Stellfläche in der Klemmeinrichtung 30
- 40: Formteil, insbesondere Ultradentformteil
- 41: untere Probenöffnung der Probenvertiefung 46
- 42: unterer Rand der Probenvertiefung 46
- 43: obere Probenöffnung der Probenvertiefung 46
- 44: äußerer Rand des Formteils 40
- 45: Innenwand der Probenvertiefung 46
- 46: Probenvertiefung im Formteil 40
- 47: Stützen
- 48: Oberseite des Formteils 40
- 50: Vorrichtung zur Kraftausübung, insbesondere einer Scher-, Schub- und/oder Zugkraft
- 51: Formteil zur Kraftausübung
- 60: Prüfkörper
- 61: erste Oberfläche, insbesondere Zahnoberfläche, bevorzugt Schmelz und/oder Dentin
- 62: Unterseite des Prüfkörpers
- 63: Außenwand des Prüfkörpers 60
- 64: Zahn
- 65: Zahnschmelz
- 66: Dentin
- 67: Einbettungsmaterial, z.B. Acrylharz
- 70: Dentalmaterial, insbesondere haftendes, selbstadhäsives oder nicht-adhäsives Dentalmaterial
- 71: dreidimensionaler Formkörper umfassend mindestens ein Dentalmaterial
- 72: zweite Oberfläche, insbesondere die eines Formkörpers 71
- 73: Außenfläche des Formkörpers 71
- 74: Kraft- bzw. Kontaktfläche zwischen dem Formkörper 71 und dem Formteil 51
- 80: Spalt
- 90: Zwischenschicht umfassend mindestens ein haftendes Dentalmaterial, wie Adhäsiv bzw. Primer, selbstätzende Primer, Keramik-Primer, Metall-Primer

## Patentansprüche

1. Vorrichtung (20) umfassend
- eine Klemmvorrichtung (30) zum Fixieren mindestens einer ersten Oberflächen (61) eines, in die Klemmvorrichtung (30) einsetzbaren, Prüfkörpers (60) und
- mindestens ein Justierelement (10) zur Ausrichtung der Höhe und/oder Neigung einer ersten Oberfläche (61) in eine planparallele Position relativ zu mindestens einer Kontaktfläche (21).

2. Vorrichtung (20) nach Anspruch 1 geeignet zur Herstellung mindestens eines Haftverbundes an mindestens einer Kontaktfläche (21) zwischen einer ersten Oberfläche (61) und mindestens einer zweiten Oberfläche (72), **dadurch gekennzeichnet, dass**
a) die Höhe des mindestens einen Justierelementes (10) kontinuierlich oder schrittweise in einem Bereich von größer gleich 0 mm und/oder
b) die Neigung des mindestens einen Justierelementes (10) kontinuierlich oder schrittweise bis zu einem Winkel alpha von größer gleich 0'Winkelminuten zwischen einer Ebene E des Justierelementes (10) und der Unterseite (62) des Prüfkörpers (60) einstellbar ist.

3. Vorrichtung (20) nach Anspruch 1 oder 2, **dadurch gekennzeichnet, dass**
a) die Höhe des mindestens einen Justierelementes (10) kontinuierlich oder schrittweise in einem Bereich von größer gleich 4 mm bis kleiner gleich 100 mm und/oder
b) die Neigung des mindestens einen Justierelementes (10) kontinuierlich oder schrittweise bis zu einem Winkel alpha von größer gleich 6'Winkelminuten bis kleiner gleich 50 ° zwischen einer Ebene E des Justierelementes (10) und der Unterseite (62) des Prüfkörpers (60) einstellbar ist.

4. Vorrichtung (20) nach einem der Ansprüche 1 bis 3, **dadurch gekennzeichnet, dass** sie ferner umfasst
- ein Formteil (40) umfassend eine obere Probenöffnung (43) zum Einbringen und Positionieren eines Dentalmaterials (70) in die Probenvertiefung (46) auf der ersten Oberfläche (61),
wobei die Innenwand (45) des unteren Randes (42) der unteren Probenöffnung (41) eines Formteils (40) und die unterhalb des unteren Randes (42) des Formteils (40) angeordnete erste Oberfläche (61) die mindestens eine Kontaktfläche (21) abgrenzen (Fig. 3), und
- mindestens ein Justierelement (10) zur Ausrichtung der Höhe und/oder Neigung einer ersten Oberfläche (61) in eine planparallele Position relativ zu mindestens einer Kontaktfläche (21) und/oder zum unteren Rand (42) des Formteils (40).

5. Vorrichtung (20) nach einem der Ansprüche 1 bis 4, **dadurch gekennzeichnet, dass** das mindestens eine Justierelement (10) die Bauteile umfasst i) eine untere Standfläche (11), ii) ein oberhalb der Standfläche (11) angeordnetes Höhen verstellbares Bauteil (12) und/oder iii) ein auf dem Bauteil (12) angeordnetes im Winkel verstellbares Bauteil (13), und iv) eine obere Prüfkörper-Stellfläche (14) und v) optional mindestens eine Arretiervorrichtung (15) zur Fixierung der Position der eingestellten Höhe und/oder Neigung und vi) optional mindestens ein mit der Standfläche (11) verbundenes Fixierelement (16) zur Anbringung des Justierelementes (10) in eine Vorrichtung (20).

6. Verfahren zur Herstellung eines Haftverbundes an mindestens einer Kontaktfläche (21) zwischen einer ersten Oberfläche (61) eines Prüfkörpers (60) und mindestens einer zweiten Oberfläche (72), wobei die mindestens eine Kontaktfläche (21) durch die Innenwand (45) des unteren Randes (42) der unteren Probenöffnung (41) eines Formteils (40) und die unterhalb des unteren Randes (42) des Formteils (40) angeordnete erste Oberfläche (61) abgegrenzt wird (Fig. 3),
umfassend die Schritte
a) Positionieren eines Prüfkörpers (60) mit seiner Unterseite (62) auf der Prüfkörperstellfläche (14) eines Justierelementes (10), wobei
- die Höhe des mindestens einen Justierelementes (10) kontinuierlich oder schrittweise in einem Bereich von größer gleich 0 mm und/oder
- die Neigung des mindestens einen Justierelementes (10) kontinuierlich oder schrittweise bis zu einem Winkel alpha von größer gleich 0'Winkelminuten zwischen einer Ebene E des Justierelementes (10) und der Unterseite (62) des Prüfkörpers (60) einstellbar ist,
b) Ausrichten der erste Oberfläche (61) in eine planparallel Position relativ zu der Kontaktfläche (21) und in einem Winkel beta von 90° zur Innenwand (45) einer Probenvertiefung (46) des Formteils (40) (Fig. 3a),
c) In Kontakt bringen der ersten Oberfläche (61) mit dem unteren Rand (42) der unteren Probenöffnung (41) des Formteils (40), wobei der untere Rand (42) bündig mit der ersten Oberfläche (61) abschließt (Fig. 3a),
d) Einbringen mindestens eines Dentalmaterials (70) durch die obere Probenöffnung (43) in die Probenvertiefung (46), insbesondere ist das Dentalmaterial (70) ausgewählt aus
(1) selbstadhäsiven Dentalmaterialien (70) umfassend Ein- und Zwei-Komponenten Dentalmaterialien umfassend dentale selbstadhäsive Polymere, selbstadhäsive Kompositmaterialien, selbstadhäsive Füllungsmaterialien/ -kunststoffe, selbstadhäsive Verblendmaterialien/-kunststoffe, selbstadhäsive Prothesenkunststoffe, selbstadhäsive Stumpfaufbauten, selbstadhäsive Zemente und selbstadhäsive Fissurenversiegler, und/oder
(2) haftenden Dentalmaterialien (70) umfassend Adhäsive, Adhäsive für Zahn-Kunststoff-Klebung, Adhäsive für Zahn-Keramik-Klebung, Adhäsive für Zahn-Metall-Klebung, Adhäsive für Metall-Kunststoff-Klebung, Adhäsive für Metall-Keramik-Klebung, Adhäsive für Keramik-Kunststoff-Klebung, Adhäsive für Kunststoff-Kunststoff-Klebung, Adhäsive für Keramik-Keramik-Klebung
e) Bilden mindestens eines Haftverbundes an der Kontaktfläche (21) zwischen der ersten Oberfläche (61) und der mindestens zweiten Oberfläche (72), und
f) Erhalten eines Haftverbundes in Form eines dreidimensionalen Formkörpers (71) nach einer Alternative (a) zwischen der ersten Oberfläche (61) und einer zweiten Oberfläche (72) eines selbstadhäsiven Dentalmaterials (70) in Form eines dreidimensionalen Formkörpers (71) (Fig. 5a) oder
nach einer Alternative (b) zwischen der ersten Oberfläche (61) und einer zweiten Oberfläche (72) eines haftenden Dentalmaterials (70), insbesondere Adhäsivs, in Form mindestens einer Zwischenschicht (90) (Fig. 5b, c).

7. Verfahren nach Anspruch 6, **dadurch gekennzeichnet, dass** b) die erste Oberfläche (61) des Prüfkörpers (60) mittels mindestens eines Justierelementes (10) durch Verstellen der Höhe und/oder der Neigung des Justierelementes (10) relativ zur Kontaktfläche (21) und dem unteren Rand (42) des Formteils (40) in eine planparallele Anordnung der Oberflächen zu einander und in einem Winkel beta von 90° zur Innenwand (45) der Probenvertiefung (46) ausgerichtet werden, wobei
i) der Winkel alpha zwischen einer Ebene E des Justierelementes (10) und der Unterseite (62) des Prüfkörpers (60) in einem Bereich von größer gleich 0' Winkelminuten einstellbar ist und/oder
ii) die Höhe in einem Bereich von größer gleich 0 mm einstellbar ist und
optional eine Fixierung des vorbeschriebenen Aufbaus durch mindestens ein Fixierelement (31) erfolgt.

8. Verfahren zur Bestimmung der Haftfestigkeit mindestens eines Dentalmaterials (70) an einer ersten Oberfläche (61) eines Prüfkörpers (60) in mindestens einem Haftverbund, wobei der Haftverbund an einer Kontaktfläche (21) vorliegt,
und die mindestens eine Kontaktfläche (21) der Fläche entspricht, die durch die Innenwand (45) des unteren Randes (42) der unteren Probenöffnung (41) eines Formteils (40) und die unterhalb des unteren Randes (42) des Formteils (40) angeordnete erste Oberfläche (61) abgegrenzt wird (Fig. 3),
und der mindestens eine Haftverbund ein dreidimensionaler Formkörper (71) ist umfassend
- nach einer Alternative (a) mindestens eine Haftverbund zwischen der ersten Oberfläche (61) und einer zweiten Oberfläche (72) eines selbstadhäsiven Dentalmaterials (70) in Form eines dreidimensionalen Formkörpers (71) (Fig. 5a) oder
- nach einer Alternative (b) mindestens eine Haftverbund zwischen der ersten Oberfläche (61) und einer zweiten Oberfläche (72) eines haftenden Dentalmaterials (70), insbesondere Adhäsivs, in Form mindestens einer Zwischenschicht (90) (Fig. 5b, c),
umfassend die Schritte
a) Einspannen des dreidimensionalen Formkörpers (71) in eine Vorrichtung (50) umfassend ein Formteil (51) zur Kraftausübung,
b) Ausüben eine Scher, Schub- und/oder Zugkraft auf den mindestens einen Haftverbund an der Kontaktfläche (21) und
c) Messen der im Zeitpunkt des Bruches des mindestens einen Haftverbundes aufgebrachten Scher-, Schub- und/oder Zugkraft.

9. Verfahren nach Anspruch 8, **dadurch gekennzeichnet, dass**
a) das Formteil (51) den dreidimensionalen Formkörper (71) entlang seiner Längsachse zumindest teilweise formbündig umschließt,
b) die Kraft im Wesentlichen durch das Formteil (51) an einer minimalen Kraft- bzw. Kontaktfläche (74) an der Außenfläche (73) des Formkörpers (71) ausgeübt wird und
c) die Haftfestigkeit des mindestens einen Haftverbundes in Kraft pro Kontaktfläche (21).

10. Verfahren nach Anspruch 6 oder 7 und/oder Verfahren nach Anspruch 8 oder 9, **dadurch gekennzeichnet, dass** es jeweils ein Verfahren nach DIN EN ISO 29022 ist und die darin definierten Normen erfüllt.

11. Verwendung mindestens eines Justierelementes (10) zur Ausrichtung der Höhe und/oder Neigung einer ersten Oberfläche (61) eines Prüfkörpers (60) in eine planparallele Position relativ zu mindestens einer Kontaktfläche (21) und/oder zu mindestens einer zweiten Oberfläche (72) in einer Vorrichtung (20) (Fig. 4).

12. Verwendung nach Anspruch 11, **dadurch gekennzeichnet, dass** das mindestens eine Justierelement (10) an der Unterseite (62) eines Prüfkörpers (60) positioniert wird.

13. Verwendung nach Anspruch 11 oder 12, **dadurch gekennzeichnet, dass**
a) die Höhe des mindestens einen Justierelementes (10) kontinuierlich oder schrittweise in einem Bereich von größer gleich 0 mm und/oder
b) die Neigung des mindestens einen Justierelementes (10) kontinuierlich oder schrittweise bis zu einem Winkel alpha von größer gleich 0'Winkelminuten zwischen einer Ebene E des Justierelementes (10) und der Unterseite (62) des Prüfkörpers (60) einstellbar ist.

14. Verwendung nach einem der Ansprüche 11 bis 13, **dadurch gekennzeichnet, dass** die Vorrichtung (20) eine Vorrichtung zur Herstellung mindestens eines Haftverbundes an mindestens einer Kontaktfläche (21) (Fig. 3a) ist und die mindestens eine Kontaktfläche (21) durch die Innenwand (45) des unteren Randes (42) der unteren Probenöffnung (41) eines Formteils (40) und der unterhalb des unteren Randes (42) des Formteils (40) angeordneten ersten Oberfläche (61) abgegrenzt wird (Fig. 3).

15. Verwendung der Vorrichtung (20) nach einem der Ansprüche 1 bis 5 zur Herstellung mindestens eines Haftverbundes an einer Kontaktfläche (21) zwischen einer ersten Oberfläche (61) und mindestens einer zweiten Oberfläche (72) umfassend mindestens ein Dentalmaterial (70), zur Herstellung eines dreidimensionalen Formkörpers (71) umfassend mindestens einen Haftverbund zwischen einer ersten Oberfläche (61) und mindestens einer zweiten Oberfläche (72), zur Herstellung mindestens eines Haftverbundes nach DIN EN ISO 29022, zur Herstellung eines dreidimensionalen Formkörpers (71) umfassend mindestens einen Haftverbund nach DIN EN ISO 29022, zur Herstellung mindestens eines Haftverbundes zur Verwendung in einem Verfahren zur Bestimmung der Kraft, die zur Trennung oder zum Bruch des mindestens einen Haftverbundes aufgebracht werden muss und Verwendung eines Haftverbundes zwischen einer ersten Oberfläche (61) und mindestens einem Dentalmaterial (72) in einem Verfahren zur Messung der Haftfestigkeit eines haftenden Dentalmaterials oder eines selbstadhäsiven Dentalmaterials (70) auf einer ersten Oberfläche (61) und in einem Verfahren zur Bestimmung der Scherhaftung nach DIN EN ISO 29022.
